# EUROPEAN PATENT SPECIFICATION

(11) **EP 2 368 945 B1**
(45) Date of publication and mention of the grant of the patent: **27.03.2019**
(21) Application number: 11162283.3
(22) Date of filing: 16.01.2004
(51) Int. Cl.: C09D 5/08, C09C 1/56, C23C 22/83

(54) **CORROSION RESISTANT COATINGS**
KORROSIONSBESTÄNDIGE BESCHICHTUNGEN
REVÊTEMENTS RÉSISTANTS À LA CORROSION

(30) Priority: 17.01.2003 US 346374; 07.03.2003 US 452843 P
(43) Date of publication of application: 28.09.2011
(62) Divisional of application: 04702959.0
(73) Proprietor: The Curators of the University of Missouri, Columbia, MO 65211-2015 (US)
(72) Inventor: Stoffer, James O., Rolla, MO 65401 (US); O'Keefe, Thomas J., Rolla, Missouri 65401 (US); Morris, Eric, Irvine, CA 92604 (US); Hayes, Scott, Zion, IL 60099 (US); Yu, Pu, Deceased (US)
(74) Representative: Dehns

(56) References cited:
- EP-A- 0 902 103
- EP-A- 1 125 989
- WO-A-02/31064

## Description

### Technical Field

This invention relates to coatings, and, in particular, this invention relates to corrosion resistant coatings.

### Background

Coatings are employed for a number of reasons. Product coatings or industrial coatings are typically applied in a factory on a given substrate or product, such as appliances, automobiles, aircraft, and the like. Many industries, including the aircraft industry, typically employ coating systems that provide both corrosion protection and enhanced performance.

In order to improve the corrosion resistance of a metal substrate, corrosion inhibitive pigments or additives are typically used in the coatings applied to the substrate. A common corrosion inhibitive pigment is strontium chromate, which provides excellent corrosion resistance. However, in recent years there has been widespread concern over the use of chromates, as they are known to be highly toxic and carcinogenic. Furthermore, the disposal of chromate materials is becoming increasingly difficult as municipal and government regulations are becoming more stringent.

As a result, there have been attempts to produce corrosion resistant coatings by using environmentally acceptable corrosion inhibitive pigments or additives. However, these coatings are problematic in that some of the pigments or additives used are either not compatible with the paint or cause the paint to peel off the substrate. Some are actually known to accelerate the corrosion process.

Thus there is a need to provide corrosion resistant coatings that are effective, yet not based on chromates.

### Summary

The present invention relates to a non-chromate containing corrosion inhibiting coating composition comprising:one or more organic binders; and solid components comprising:a praseodymium oxide selected from the group consisting of oxides, mixed oxides, solid solution oxides, hydrated oxides, and combinations thereof; and one or more neutral to slightly acidic generating extenders, wherein the neutral to slightly acidic generating extenders are selected from the group consisting of cerous phosphate, calcium sulfate, strontium sulfate, protonated calcium phosphate, and combinations thereof;wherein the solid components comprise 0.1 wt% to 90 wt% of the praseodymium oxide;wherein the non-chromate containing composition is capable of curing naturally and, upon curing, is capable of generating a pH between 4 and 8 at an interface between the composition and a substrate.

The invention additionally relates to a method for preparing a non-chromate containing coating composition comprising: preparing a paint formulation comprised of an organic binder; and adding an effective corrosion-inhibiting amount of a solid component to the paint formulation to produce a coating composition, the solid component comprising: a praseodymium oxide selected from the group consisting of oxides, mixed oxides, solid solution oxides, hydrated oxides, and combinations thereof; and one or more neutral to slightly acidic generating extenders, wherein the neutral to slightly acidic generating extenders are selected from the group consisting of cerous phosphate, calcium sulfate, strontium sulfate, protonated calcium phosphate, and combinations thereof; wherein the praseodymium oxide comprises 1 wt% to 90 wt% of the solid components; wherein the non-chromate containing composition is capable of curing naturally and, upon curing, is capable of generating a pH between 4 and 8 at an interface between the composition and a substrate.

Further embodiments are set out in the dependent claims.

The coatings described herein have excellent corrosion resistance performance, while maintaining acceptable levels of paint adhesion properties. The coating compositions are useful in many industries, including, but not limited to, the aerospace and aircraft industries.

EP0902103 discloses a corrosion resistant coating composition comprising a rare earth oxyacid wherein the rare earth element is selected from a list comprising praseodymium.

### Detailed Description of the Embodiments

In the following detailed description, embodiments are described in sufficient detail to enable those skilled in the art to practice the invention. The following detailed description is, therefore, not to be taken in a limiting sense. The detailed description that follows begins with a definition section followed by a description of various embodiments of the invention. A series of examples is presented next followed by a brief conclusion.

### Definitions

As used herein, the term "substrate" refers to a structure having a surface that can be cleaned and/or protected and/or modified to provide unique properties. A "substrate" is not limited to any particular type of material, although in terms of applying a corrosion inhibiting coating, such substrates are typically metal. However, corrosion inhibiting coatings can also be applied to other substrates, such as a polymeric substrate (e.g., coated metallic substrate). A corrosion inhibiting coating can also be applied to a composite substrate, such as a substrate made with carbon fibers and epoxy resin. Although a composite substrate does not corrode, a corrosion inhibiting coating can still be used with a composite substrate to provide surface protection and/or other unique properties to the substrate, although the coating must be compatible with the substrate material. In some instances, although the majority of the substrate can be made from a composite material and therefore not need protection from corrosion, the presence of other metallic surfaces within the desired coating area, e.g., metallic rivets, requires the use of a corrosion inhibiting coating.

As used herein, the term "extender" or "extender pigment" when used without qualification, refers to a type of pigment that is typically incorporated into a paint formulation to provide volume to the final resulting coating after paint curing, although it can be added for other reasons, such as to reduce cost. An extender can additionally or alternatively be an active component in making a total system more corrosion resistant. Extenders which add volume are often referred to as "fillers" or "extenders/fillers."

As used herein, the term "neutral to slightly acidic generating extender", i.e., "neutral to slightly acidic generating additive", refers to a metal cation and a corresponding oxyanion (meaning those anions having an oxygen combined with one or more nonmetals). Preferred but not required extenders are sulfur, phosphorus and silicon oxyanion-containing compounds. Of particular interest are sulfur, phosphorus and silicon oxyanion-containing salts. A neutral to slightly acidic generating extender can be used alone or in combination with other components to generate a pH environment of between about 4 to about 8 in a coating composition (with the pH of the coating composition determined by standard methods and concentrations known to those of skill in the art). This environment appears to help enhance and optimize transport of the particular inhibitor species being used, from the coating composition to areas of exposed underlying substrate. A neutral to slightly acidic generating extender can itself be acidic, neutral or basic (e.g., Na₂HPO₄) and can also add extender properties to the coating composition. In most instances, a neutral to slightly acidic generating extender does not substantially solubilize in the coating composition, thereby adding volume to the composition. Examples of neutral to slightly acidic generating extenders include, but are not limited to, sulfates, sulfites, silicates, phosphates, phosphites, phosphonates, hydrogen sulfate, hydrogen sulfite, mono and di-hydrogen phosphate, mono and di-hydrogen phosphites and mono hydrogen phosphonate. Further examples include oxyphosphorus compounds, such as cerous phosphate and some Group IIA sulfates, such as calcium sulfate, strontium sulfate and the like. However, it is manifestly intended to include within this term neutral to slightly acidic generating extenders, i.e., additives, which are substantially soluble and therefore do not add volume to the composition. Examples include certain sulfates known in the art to not be useful in adding volume but which have shown surprisingly good results as corrosion inhibitors, such as magnesium sulfate and some Group IA sulfates. The precise amount of neutral to slightly acidic generating extender needed to generate the desired pH in the composition will vary depending the type and amount of binders, solvents, pigments and other additives, including other types of extenders present in the coating composition.

As used herein, the term "acidic generating extender", i.e., "acidic generating additive," refers to a metal cation and a corresponding oxyanion (meaning those anions having an oxygen combined with one or more nonmetals). Preferred but not required extenders are sulfur, phosphorus and silicon oxyanion-containing compounds. Of particular interest are sulfur, phosphorus and silicon oxyanion-containing salts. An acidic generating extender can be used alone or in combination with other components to generate a pH environment of less than between about 2 to about 4 in a coating composition (with the pH of the coating composition determined by standard methods and concentrations known to those of skill in the art).This environment appears to help enhance and optimize transport of the particular inhibitor species being used, from the coating composition to areas of exposed underyling substrate. An acidic generating extender can itself be acidic or neutral and can also add extender properties to the coating composition. Examples of compounds that are capable of generating a pH environment of between about 2 to about 4 include, but are not limited to certain hydrogen sulfates such as calcium hydrogen sulfate, calcium hydrogen phosphate and calcium di-hydrogen phosphate. Again, it is manifestly intended to include within this term acidic generating extenders that are substantially soluble, thereby not adding volume to the composition. It is possible that the same compound can be properly categorized as both an "acidic generating extender" and a "neutral to slightly acidic generating extender", since it is capable of generating either environment. One example of a compound that can generate either environment includes, but is not limited to, calcium hydrogen phosphate. Additionally, the precise amount of acidic generating extender needed to generate the desired pH in the composition will vary depending on the type and amount of binders, solvents, pigments and other additives present.

As used herein, the term "substantially soluble" refers to a solubility level of more than about one (1) mole per liter of water (mol/L).

As used herein, the term "not substantially soluble" refers to a solubility level of less than about one (1) mol/L.

As used herein, the term "coating" refers to a polymeric material (organic or inorganic) that can be applied either as a liquid (e.g., paint) or solid (e.g., powder) to a substrate to form a polymeric film. Such polymeric materials include, but are not limited to, powder coatings, paints, sealants, conducting polymers, sol gels (e.g.Boegel™made by Boeing Co. having offices in Chicago, Illinois), silicates, silicones, ziriconates, titonates, and the like. A "coating" is comprised of a complex mixture of binders, solvents, pigments and additives. Many coatings have one or more substances from each of the four categories. Coating properties, such as gloss and color, are related to the film surface, i.e., as a two-dimensional entity. However, the bulk properties of a coating are related to its three-dimensional structure. Phase continuity is a volume concept, and the coating performance is dependent on the integrity of the binder phase.

As used herein, the term "binder" refers to any film-forming polymeric material which can be used to make coatings. The polymeric material can be either organic or inorganic. Organic binders have a carbon backbone and inorganic binders generally have a silicone backbone. Organic binders are made up of organic monomers and oligomers from which the binders generally derive their names. Examples of these would be acrylic, epoxy, urethane, melamine, and so forth. Binders include epoxy-based resin binders such as a water reducible epoxy-polyamide system (for organic polymeric materials) or non epoxy-based resin binders such as urethanes, ureas, acrylates, alkyds, melamines, polyesters, vinyls, vinyl esters, silicones, siloxanes, silicates, sulfides, silicate polymers, epoxy novilacs, epoxy phenolics, drying oils, hydrocarbon polymers.

As used herein, the term "weight percent (wt %)" when used without qualification, typically refers to the weight percent of a particular solid component, e.g., pigment, extender, etc., as compared with all solid components present, excluding polymeric resins. For example, if the only solid component present in the coating is a corrosion-inhibiting carbon pigment, the corrosion-inhibiting carbon pigment is considered to have a wt% of 100.

As used herein, the term "mixed oxide" refers to a solid solution of a single element having multiple oxidation states and is not intended to refer to a mixture of oxides.

As used herein, the term "topcoat" refers to a mixture of a binder(s), which can be an organic or inorganic based polymer or a blend of polymers, typically at least one pigment, can optionally contain at least one solvent or mixture of solvents, and can optionally contain at least one curing agent. A topcoat is typically the coating layer in a single or multi-layer coating system whose outer surface is exposed to the atmosphere or environment, and its inner surface is in contact with another coating layer or polymeric substrate. One example of a topcoat is a urethane topcoat.

As used herein, the term "self-priming topcoat", also known as a "direct to substrate coating", refers to a mixture of a binder(s), which can be an organic or inorganic based polymer or blend of polymers, typically at least one pigment, can optionally contain at least one solvent or mixture of solvents, and can optionally contain at least one curing agent. A self-priming topcoat is typically applied directly to a substrate. The self-priming topcoat can optionally be applied to an organic or inorganic polymeric coating, such as a primer or paint film. A self-priming topcoat is typically the coating layer in a single or multi-layer coating system where the outer surface of the coating is exposed to the atmosphere or environment, and the inner surface of the coating is typically in contact with the substrate or optional polymer coating or primer.

As used herein, the term "enhanced self-priming topcoat", also referred to herein as an "enhanced direct to substrate coating" refers to a mixture of functionalized fluorinated binders, such as a fluoroethylene-alkyl vinyl ether in whole or in part with other binder(s), which can be an organic or inorganic based polymer or blend of polymers, typically at least one pigment, can optionally contain at least one solvent or mixture of solvents, and can optionally contain at least one curing agent. An enhanced self-priming topcoat is typically applied directly to a substrate. The enhanced self-priming topcoat can optionally be applied to an organic or inorganic polymeric coating, such as a primer or paint film. An enhanced self-priming topcoat is typically the coating layer in a single or multi-layer coating system where the outer surface of the coating is exposed to the atmosphere or environment, and the inner surface of the coating is typically in contact with the substrate or optional polymer coating or primer.

The topcoat, self-priming topcoat, and enhanced self-priming topcoat can be applied to a substrate, in either a wet or "not fully cured" condition that dries or cures over time, that is, solvent evaporates. The coatings can dry or cure either naturally or by accelerated means for example, an ultraviolet light cured system to form a film or "cured" paint. The coatings can also be applied in a semi or fully cured state, such as an adhesive.

As used herein, the terms "paint formulation", "primer formulation", "topcoat formulation", "self-priming topcoat formulation", and "enhanced self-priming topcoat formulation" refer to a list of ingredients, and/or components, and can also include a list of instructions for preparing and mixing together the ingredients, and/or components to make a coating composition.

As used herein, the terms "mill base", "mill base formulation", "primer mill base", "topcoat mill base" and "base", "base formulation", or "primer base", "topcoat base", "self-priming topcoat base", and "enhanced direct to substrate base" refer to a portion or component of a paint formulation that comprises the majority, if not all, of the pigmentation of the coating composition, as well as some additives.

### Discussion

Embodiments of the invention provide compositions for primer coatings that allow for improved corrosion resistance of metal substrates. In one embodiment non-primer coatings are used. In one embodiment non-metal substrates are used. Moderate to low concentrations of rare earth compounds, alone or in combination with other materials or components, have been formulated into coating mixtures providing corrosion resistance. Additionally provided are extenders, including moderate to low concentrations of neutral to slightly acidic generating extenders and acidic generating extenders, also alone or in combination with other materials or components, which have been formulated into coating mixtures providing corrosion resistance.

In one embodiment, coatings containing rare earth compounds, neutral to slightly acidic generating extenders and/or acidic generating extenderss in varying concentrations are provided to enhance the corrosion resistance properties of the resulting coating films. In one embodiment, the coatings are aqueous or solvent borne coating compositions applied as liquids, e.g., paint. In other embodiments, the coatings are applied in powder or paste (e.g., solgel) form. In yet other embodiments, the coating is a sealant, conducting polymer, or the like.

Rare earth compounds useful in the present invention include, but are not limited to either anhydrous or hydrated rare earth oxides, hydroxides, mixed oxides, solid solution oxides, hydrated oxides, salts, triflates, carbonates, and complexes, such as rare earth complexes using ethylenediamine tetraacetic acid, organic-based ionic exchange resins, etc., and the like. In one embodiment, one or more rare earth compounds are added to a coating composition. In a particular embodiment, the one or more rare earth compounds are added in a weight percent of between 0.1 to 90 wt% of the total amount of all pigments present in the coating. In most embodiments, the coating contains between 0.1 to 28 wt%, of a rare earth compound (i.e., compounds), although the invention is not so limited.

The rare earth compounds useful herein can be based on any of the lanthanide series. Preferred for the practice of the invention are praseodymium, cerium, and terbium. Particularly preferred are praseodymium and terbium, with the most currently preferred being praseodymium. The oxidation state of the rare earth metal employed is important. For example, in the case of praseodymium, in one embodiment, praseodymium(III) is used. In another embodiment, a praseodymium(III/IV) mixture is used. In yet another embodiment, praseodymium(IV) is used. The preferred oxidation states of the rare earth compounds can also be a function of the final coating system employed. In one embodiment, the rare earth compound is a praseodymium(III) sulfate. In another embodiment, the rare earth compound is a praseodymium(III/IV) oxide or a praseodymium(III/IV) solid solution. In other embodiments the rare earth compound can be a praseodymium mixed oxide, a praseodymium(III) oxide, a praseodymium(III) hydroxide, a praseodymium(IV) oxide, and any combinations thereof, further including combinations with any other praseodymium or other metals.

In one embodiment the rare earth compound can be a cerium oxide, cerium hydroxide, cerium solid solution mixed oxide, cerium oxide mixture, cerium salt, neodymium oxide, neodymium hydroxide, neodymium solid solution mixed oxide, neodymium oxide mixture, neodymium salt, praseodymium oxide, praseodymium hydroxide, praseodymium solid solution mixed oxide, praseodymium oxide mixture, praseodymium salt, ytterbium oxide, ytterbium hydroxide, ytterbium solid solution mixed oxide, ytterbium oxide mixture, ytterbium salt, yttrium oxide, yttrium hydroxide, yttrium solid solution mixed oxide, yttrium oxide mixture, yttrium salt, terbium oxide, terbium hydroxide, terbium solid solution mixed oxide, terbium oxide misture, terbium salt, and combinations thereof.

Many rare earth compounds, alone or in combination with other materials, have been evaluated to date (See Examples). These compounds have been incorporated into commercially available primer formulations as corrosion inhibitors. Evaluation of these primer coatings containing the rare earth compounds alone or in combination with the other materials in neutral salt fog environments demonstrates that the presence of these corrosion inhibitors improves the overall corrosion resistance of the metal substrate, although it is likely any substrate, as defined herein, can benefit from application of such coatings. Similarly, it is expected that any type of coating can benefit from inclusion of rare earth compounds, alone or in combination with other components. Elemental characterization of these systems suggests leaching of the inhibitor passivates and protects the underlying metal substrate.

Extenders useful in the present invention include, but are not limited to, neutral to slightly acidic generating extenders and acidic generating extenders. In one embodiment, one or more neutral to slightly acidic generating extenders are used. Such extenders can be acidic, neutral or basic. Examples include, but are not limited to, sulfates, sulfonates, sulfides, sulfites, phosphates, phosphonates, phosphides, phosphates, nitrates, nitrites, nitrides, silicates and combinations thereof. In one embodiment, one or more acidic generating extenders are used. Such extenders can be acidic or neutral. Examples include, but are not limited to acid-modified compounds, such as acid-modified phosphates, phosphides, phosphates, kaolins, wallastonites, silicates and combinations thereof.

Also useful in the present invention are conventional extenders that can serve as a cost effective substitute for coloring pigments such as TiO₂ and can further provide the desired pigment to binder ratios for the primer coatings. One example of a conventional extender includes, but is not limited to, calcium carbonate. Many of these extenders appear to assist in the activation of inhibitors that can be present in the environment (e.g., in previously applied conversion coatings, in the polymeric coating itself, etc.), thus enhancing the corrosion resistance of the protective coating.

In one embodiment, the neutral to slightly acidic generating extenders or acidic generating extenders include Group I and II metal cations. In one embodiment, the neutral to slightly acidic generating extenders or acidic generating extenders include sulfates and phosphates of praseodymium (such as praseodymium(III), (IV) or (III/IV) mixtures), calcium, strontium, barium and magnesium, and the natural forms of these compounds such as gypsum and celestite. Preferably the neutral to slightly acidic generating extenders or acidic generating extenders include calcium, strontium, and barium sulfates and phosphates that do not substantially solubilize in the coating composition, although the invention is not so limited. In one embodiment, the neutral to slightly acidic generating extenders or acidic generating extenders are selected from the group that includes, but is not limited to, sulfates, including metal sulfates (e.g., anhydrous calcium sulfate, hydrated calcium sulfate, strontium sulfate, barium sulfate, hydrated magnesium sulfate, etc.), metal phosphates (e.g., hydrous calcium phosphate, anhydrous calcium phosphate and mono- and di-hydrogen calcium phosphate, etc.). Again, any of the extenders described herein can be used in either natural (mineral) or synthetic form. The acidic generating extenders can further include non-sulfate, non-phosphate and non-nitrate acidic generating extenders, such as the Burgess extenders including calcined clays, e.g., calcined kaolin clays, etc., made by the Burgess Pigment Co. having offices in Sandersville, Georgia, and the like. However, other metal cations and anions having the aforementioned properties can be used as neutral to slightly acidic generating extenders and acidic generating extenders in the coating compositions of the present invention, as will be understood by those of skill in the art with reference to this disclosure.

In one embodiment, one or more neutral to slightly acidic generating extenders and/or one or more acidic generating extenders are used. The amount of extenders used can vary considerably, because some are more efficient in the particular system being used. In one embodiment, neutral to slightly acidic generating extenders and/or acidic generating extenders are added in a weight percent of between about 1 to about 99% of the total amount of all pigments in the coating. In most embodiments the coating contains between about 30 to about 80 wt% of one or more neutral to slightly acidic generating extenders and/or acidic generating extenders. In more preferred embodiments, the coating contains between about 45 to 75 wt% of one or more neutral to slightly acidic generating extenders and/or acidic generating extenders. In a particular embodiment, between about 0.1 to about 3 wt% of one or more types of magnesium sulfate is used.

Several neutral to slightly acidic generating extenders and acidic generating extenders have been evaluated to date, alone or in combination with other materials (See Examples). These compounds have been incorporated into commercially available primer formulations as corrosion inhibitors. Evaluation of these primer coatings containing these extenders alone or in combination with the other materials in neutral salt fog environments demonstrates that the presence of these corrosion inhibitors improves the overall corrosion resistance of the metal substrate, although it is likely any substrate, as defined herein, can benefit from application of such coatings. Similarly, it is expected that any type of coating can benefit from inclusion of neutral to slightly acidic generating extenders and/or acidic generating extenders, alone, or in combination with other components. Elemental characterization of these systems suggests leaching of the inhibitor passivates and protects the underlying metal substrate.

The "other materials or components" (i.e., "other components") with which the corrosion inhibitors described herein can be combined include, for example, binders, solvents, pigments (including soluble or non-soluble extenders, fillers, corrosion-inhibiting pigments, and the like), solvents, additives (e.g., curing agents, surfactants, dyes, amino acids and the like), and so forth. Note that some additives can also properly be considered a pigment and vice versa (e.g., matting agents). More specifically, these "other components" include, but are not limited to, glycine, arginine, methionine, and derivatives of amino acids, such as methionine sulfoxide, methyl sulfoxide, and iodides/iodates, gelatin and gelatin derivatives, such as animal and fish gelatins, linear and cyclic dextrins, including alpha and beta cyclodextrin, triflic acid, triflates, acetates, talc, kaolin, organic-based ionic exchange resins, such as organic-based cationic and anionic exchange resins, organic-based ionic exchange resins, such as organic-based cationic and anionic exchange resins, organic-based ionic exchange resins that have been pre-exchanged or reacted with the salts, oxides, and/or mixed oxides of rare earth material, and metal sulfates, such as sulfates of rare earth materials, magnesium sulfate, calcium sulfate (anhydrous and hydrated forms), strontium sulfate, barium sulfate, and the like.

Corrosion co-inhibitors known in the art can also optionally be employed in the present invention together with the rare earth compounds and/or neutral to slightly acidic generating extenders and/or acidic generating extenders, and, optionally, any of the other components described herein. Such co-inhibitors include, but are not limited to, borates, metaborates, aniline, polyaniline, and the like. Other co-inhibitors can also be optionally employed in the present invention, such as Nalzan™ (made by NL Industries having offices in Highstown, New Jersey), Busan™ (made by Buckman Laboratories having offices in Memphis Tennessee), Halox™ (made by Halox Inc. having offices in Hammond, Indiana), Molywhite™ (made by Sherwin Williams Inc. having offices in Coffeyville, Kansas), and the like. It is appropriate to use only those co-inhibitors that are chemically compatible with the rare earth- or neutral to slightly acidic generating- or acidic generating extender-containing paint formulation.

The various corrosion inhibitors described herein are typically combined with a binder, such as an organic polymer. The organic polymers useful herein as binders include those soluble in water and those soluble in non-aqueous systems and powder coating systems. Polymers that are film-forming and that crosslink upon curing are preferred. Examples of these polymers include, but are not limited to, epoxy, urethane, urea, acrylate, alkyd, melamine, polyester, vinyl, vinyl ester, silicone, siloxane, silicate, sulfide, sulfone, epoxy novolac, epoxy phenolic, amides, drying oils, and hydrocarbon polymers.

All of the corrosion inhibitors (including co-inhibitors) discussed herein are preferably prepared in a liquid form. Thus, the binder, such as an organic polymer, is dispersed or dissolved in an appropriate solvent, such as water or a non-aqueous solvent depending on the nature of the polymer, and the appropriate amount of corrosion inhibitor(s) is added.

The corrosion inhibitors (including co-inhibitors) described above were evaluated in a polyamide/epoxy-based water reducible primer paint formulation, although the present invention is not limited to this specific epoxy-based system. As such, the corrosion inhibitors can be incorporated into other primer paint formulations and employed in other applications where corrosion prevention is desired. Other resins can include, but are not limited to, e-coats, epoxy, urethane, urea, acrylate, alkyd, melamine, polyester, vinyl, vinyl ester, silicone, siloxane, silicate, sulfide, sulfone, epoxy novilac, epoxy phenolic, amides, drying oils, and hydrocarbon polymers. The preferred polymer system is a water reducible epoxy-polyamide system. In a particular embodiment, the polyamide/epoxy-based water reducible primer paint formulation used is Deft 44GN72 manufactured by Deft Inc., having offices in Irvine, California.

Addition of 0. 1 90 wt%, and preferably 0.1 to 28 wt%, of a rare earth compound into a primer formulation (or a paint ready to apply) can be by any conventional method known in the art. Similarly, addition of 1 to 99 wt% and preferably 45 to 75 wt% of a neutral to slightly acidic generating extender and/or an acidic generating extender into a primer formulation (or a paint ready to apply) can also be by any conventional method known in the art. The primer can also include 0.1 to 15 wt% and preferably 0.5 to 5 wt% of an organic-based ionic exchange resin. The resin can be either cationic or anionic in nature, both cationic and anionic can be used in the same primer formulation, and the ionic exchange resin can contain rare earth compounds and/or amino acids as pre-exchanged species prior to incorporation into a primer formulation, The primer can contain 0.03 to 5 wt%, and preferably 0.1 to 1.2 wt%, complexing sugars and/or gelatin. The primer can also contain 0.1 to 5 wt% and preferably 0.5 to 1.5 wt%, amino acids.

System enhancers can also be employed to enhance and optimize transport of the particular functional species being used and ultimately increase the concentration of the active inhibitor at the corrosion sites. Parameters that optimize transport include, but are not limited to, use of conversion coatings, particle size of the pigment, dust coat, and the like.

Conversion coatings useful herein include cerium conversion coatings (CeCC), praseodymium conversion coatings (PrCC), phosphate conversion coatings, zinc-type conversion coatings, anodized-type conversion coatings, and chromium conversion coatings (CrCC). The conversion coatings evaluated in conjunction with the present invention include CrCC, such as those obtained using the Alodine (from Henkel) and Iridite (from McDermid) processes, chromic acid anodized with chrome seal, sulfuric acid anodized with chrome seal, and the like. The age and thickness of the applied conversion coatings can further influence the corrosion resistance of the subsequent paint coatings. It is preferred to apply the paint coating over a conversion coating which is less than three days old and is relatively moderate to heavy in thickness, but yet still provides excellent adhesion to the underlying substrate. Conversion coatings that are too thick tend to result in primers with cohesive failure in the conversion coating layer. The proper conversion coating thickness will be readily apparent to one of ordinary skill in the art.

Additional additives and pigments can be employed to provide desired aesthetic or functional effects. If desired, the coating composition can contain other components, i.e., optional materials, well known in the art of formulated surface coatings. These optional materials would be chosen as a function of the coating system and application and can include flow control agents, thixotropic agents such as bentonite clay, fillers, anti-gassing agents, organic co-solvents, catalysts, and other customary auxiliaries. These materials, if used, can constitute up to 40 percent by weight of the total weight of the coating composition.

The coating composition of the present invention can also optionally contain pigments to give it color. In general, the pigment is incorporated into the coating composition in amounts of about 1 to about 80 percent, usually about 1 to about 30 percent by weight based on total weight of the coating composition. Color pigments conventionally used in surface coatings include inorganic pigments such as titanium dioxide, iron oxide, carbon black; phthalocyanine blue, and phthalocyanine green. Metallic flake pigmentation is also useful in aqueous coating compositions of the present invention. Suitable metallic pigments include aluminum flake, copper bronze flake, and metal oxide coated mica. The optional pigments can comprise up to approximately 25 weight percent of the coating composition.

The preferred concentration ranges of the components in the coating, as well as the PVC (pigment volume concentration) of the coating, can vary based on the resin/primer system employed, In concentration ranges provided, the weight percentages are based on a fully catalyzed and water reduced sprayable paint Preferred for the practice of the present invention is a coating comprising a PVC in the range of 0.1 to 65 wt % PVC. Particularly preferred is 10 to 55 wt % PVC. Most preferred is an about 25 to about 45 wt % PVC.

Preferred for the practice of one embodiment of the present invention is a fully catalyzed and water reduced sprayable paint composition comprising 0.1 to 40 wt% Pr₆O₁₁. Particularly preferred in this embodiment is 0.1 to 28 wt% Pr₆O₁₁. Most particularly preferred is 0.1 to 11 wt% Pr₆O₁₁. Other preferred ranges are as follows:

**Table 1A*****

| Rare EarthCompounds | | |
|---|---|---|
| Pr₆O₁₁: | Range: 0.1 - 90 % | Preferred: 0.4-28 wt% |
| Pr₂O₃: | Range: 0.1 - 90 % | Preferred: 0.4-28 wt% |
| PrO₂: | Range: 0.1 - 90 % | Preferred: 0.4-28 wt% |
| PrO₂ + Pr₂O₃: | Range: 0.1 - 90 % | Preferred: 0.4-28 wt% |
| Tb₄O₇: | Range: 0.1 - 90 % | Preferred: 0.4-28 wt% |
| CeO₂ Hydrous | Range: 0.1 - 90 % | Preferred: 0.4-28 wt% |
| Pr(OH)₃: | Range: 0.1 - 90 % | Preferred: 0.4-28 wt% |
| Sm₂O₃: | Range: 0.1 - 90% | Preferred: 0.4-28 wt% |
| Yb₂O₃: | Range: 0.1 - 90 % | Preferred: 0.4-28 wt% |
| Y₂O₃: | Range: 0.1 - 90 % | Preferred: 0.4-28 wt% |
| La₂O₃: | Range: 0.1 - 90 % | Preferred: 0.4-28 wt% |
| Nd₂O₃: | Range: 0.1 - 90 % | Preferred: 0.4-28wt% |

| | | |
|---|---|---|
| ***Ranges given as: "Range: x - x wt%" are understood to read as: "Range: between about x to about x wt%." | | |

Preferred for the practice of one embodiment of the present invention is a paint composition comprising about 1 to about 99 wt% of a metal sulfate. Particularly preferred in this embodiment is about 30 to about 80 wt% of CaSO₄2H₂O. Most particularly preferred is about 45 to about 75 wt% of CaSO₄·2H₂O. Other preferred ranges are as follows:

**Table 1B*****

| Neutral to Slightly Acidic Generating Extenders and Acidic Generating Extenders | | |
|---|---|---|
| *Metal Sulfates:* | | |
| CaSO₄·2H₂O: | Range: 1-99 wt% | Preferred: 45 - 75 wt% |
| SrSO₄: | Range: 1-99 wt% | Preferred: 45 - 75 wt% |
| CaSO₄ Anhyd.: | Range: 1-99 wt% | Preferred: 45 - 75 wt% |
| BaSO₄·2H₂O: | Range: 1-99 wt% | Preferred: 45 - 75 wt% |
| MgSO₄·7H₂O | Range: 1 -3 wt% | Preferred: 1.5 - 2.5 wt% |
| MgSO₄·2H₂O | Range: 0.1-3 wt% | Preferred: 1.5 - 2.5 wt% |
| Pr Sulfate: | Range: 0.1 - 5 wt% | Preferred:0.5 - 2.5 wt% |
| La₂(SO₄)₃·2H₂O: | Range: 1-99 wt% | Preferred: 45 - 75 wt% |
| Li₂SO₄·2H₂O: | Range: 1-99 wt% | Preferred: 45 - 75 wt% |

| *Metal Phosphates:* | | |
|---|---|---|
| Ca(H₂PO₄)₂·H₂O: | Range: 1-99 wt% | Preferred: 45 - 75 wt% |
| Ca(HPO₄)·H₂O: | Range: 1-99 wt% | Preferred: 45 - 75 wt% |
| Ca₃(PO₄)₂·H₂O: | Range: 1-99 wt% | Preferred: 45 - 75 wt% |

| *Other Extender Types:* | | |
|---|---|---|
| CaCO₃·2H₂O | Range: 3 -99 wt% | Preferred: 45 - 75 wt% |
| Kaolin | Range: 3- 99 wt% | Preferred:45 - 75 wt% |
| Sr Carbonate: | Range: 6 - 35 % | Preferred: 16.1 -18.8 wt% |
| Pr Carbonate: | Range: 6 - 35 % | Preferred: 16.1 -18.8 wt% |

| | | |
|---|---|---|
| ***Ranges given as: "Range: x - x wt%" are understood to read as: "Range: between about x to about x wt%." | | |

For the additional materials, the following wt % ranges are preferred:

**Table 1C*****

| Other Materials | | |
|---|---|---|
| La₂(SO₄)₃: | Range: 1 - 99 % | Preferred: 45 - 75 wt% |
| Li₂SO₄ | Range: 1 - 99 % | Preferred: 45 - 75 wt% |
| L-Arginine: | Range: 0.1 - 5 wt% | Preferred: 0.5 - 1.5 wt% |
| D,L-Arginine: | Range: 0.1 - 5 wt% | Preferred: 0.5 - 1.5 wt% |
| D-Methionine: | Range: 0.1 - 5 wt% | Preferred: 0.5 - 1.5 wt% |
| L-Methionine: | Range: 0.1 - 5 wt% | Preferred: 0.5 - 1.5 wt% |
| D,L-Methionine: | Range: 0.1 - 5 wt% | Preferred: 0.5 - 1.5 wt% |
| Glycine: | Range: 0.1 - 5 wt% | Preferred: 0.5 -1.5 wt% |
| L-Cystiene: | Range: 0.1 - 5 wt% | Preferred: 0.5 - 1.5 wt% |
| Cystene: | Range: 0.1 - 5 wt% | Preferred: 0.5 - 1.5 wt% |
| Proline: | Range: 0.1 - 5 wt% | Preferred: 0.5 - 1.5 wt% |

| Ethylenediaminetetraacetic acid (Free): | | |
|---|---|---|
| | Range:0.1 - 5 wt% | Preferred: 0.5 - 1.5wt% |

| Ethylenediaminetetraacetic acid (Disodium salt): | | |
|---|---|---|
| | Range:0.1 - 5 wt% | Preferred: 0.5 - 1.5 wt% |

| D,L-Methionine Sulfoxide: | | |
|---|---|---|
| | Range: 0.1 - 5 wt% | Preferred: 0.5 - 1.5 wt% |

| L-Methionine methylsulfonium iodide: | | |
|---|---|---|
| Animal Gelatin: | Range: 0.03 - 5 wt% | Preferred: 0.1 - 1.2 wt% |

| Proline of Fish Gelatin: | | |
|---|---|---|
| | Range: 0.03 - 5 wt% | Preferred: 0.1 - 1.2 wt% |

| Alpha or Beta Cyclodextrins: | | |
|---|---|---|
| | Range: 0.03 - 5 wt% | Preferred: 0.1 - 1.2 wt% |

| Sulfonated Cyclodextrins | | |
|---|---|---|
| | Range: 0.03 - 5 wt% | Preferred: 0.1 - 1.2 wt% |
| Triflic Acid: | Range: 0.1 - 0.5 wt% | Preferred 0.1 - 1.2 wt% |
| Pr Triflate: | Range: 0.4 - 5 wt% | Preferred: 0.7 - 3 wt% |
| Ce Triflate: | Range: 0.4 - 5 wt% | Preferred: 0.7 - 3 wt% |
| Reilex (As is): | Range: 0.1 - 15 wt% | Preferred: 0.5 - 5 wt% |

| Whatman CM23 (as is): | | |
|---|---|---|
| | Range: 0.1 - 15 wt% | Preferred: 0.5 - 5 wt% |

| Whatman CM23 Pre-Exchanged with Praseodymium Triflate: | | |
|---|---|---|
| | Range: 0.1 - 15 wt% | Preferred: 0.5 - 5 wt% |

| Whatman CM23 Pre-Exchanged with Methionine | | |
|---|---|---|
| | Range:0.1 - 15 wt% | Preferred: 0.5 - 5 wt% |

| Whatman DE23 (As is): | | |
|---|---|---|
| | Range: 0.1 - 15 wt% | Preferred: 0.5 - 5 wt% |

| Whatman P11 (As is): | | |
|---|---|---|
| | Range: 0.1 - 15 wt% | Preferred: 0.5 - 5 wt% |

| Whatman CM23 Pre-Exchanged with Praseodymium Salt such as a Nitrate Salt: | | |
|---|---|---|
| | Range: 0.1 - 15 wt% | Preferred: 0.5 - 5 wt% |

| Whatman CM23 Pre-Exchanged with Cerium Salt such as a Nitrate Salt | | |
|---|---|---|
| | Range:0.1-15 wt% | Preferred: 0.5 - 5 wt% |

| Whatman CM23 Pre-Exchanged with Sulfuric Acid: | | |
|---|---|---|
| | Range: 0.1 - 15 wt% | Preferred: 0.5 - 5 wt% |
| Sm Acetate: | Range: 0.1 - 5 wt% | Preferred: 0.5 - 2.5 wt% |

| | | |
|---|---|---|
| ***Ranges given as: "Range: x - x wt%" are understood to read as: "Range: between about x to about x wt%." | | |

Any conventional method for manufacturing a paint or coating can be used in the present invention. Examples include the use of drill presses powered by compressed air or electricity, sand mills which use appropriate grinding media, and the like. The following is an example of how a primer containing any individual or combination of the above inhibitors can be produced:
The mill base for a polyamide/epoxy-based water reducible primer formulation can be prepared (and, in fact, was prepared for all of the Examples described herein) by dispersing one or more binders, one or more pigments, solvent if needed, and a curing agent. The base for a self-priming topcoat composition, or enhanced self-priming topcoat composition can also be prepared in the same manner (and, in fact was prepared in this manner for all of the Examples described herein). In this process, the base is dispersed in an appropriately sized container at 650 rpm using a dispersion blade, such as a standard dispersion blade and standard dispersing equipment or even a drill press, as is known in the art. Next, under agitation at an appropriate speed, such as about 600 - 700 rpm, coloring pigments, naturally occurring extenders, that is, minerals such as gypsum, and synthetic extenders, together with any other corrosion inhibitors are incorporated into the coating formulation. If an appropriate grinding media is desired, it can be added as needed. Next, once the material is properly added to the formulation, the base is allowed to disperse for a suitable time and speed, such as about five more minutes at 650 rpm. After this time, the dispersion speed can be increased as needed, such as to about 1600 to 1640 rpm until the desired mill base pigment grind is obtained.

During dispersion at the higher speed, the temperature of the mill base can be monitored and kept below the recommended temperatures for the ingredients and resin systems used. If it appears that the mill base temperature is close to exceeding the recommended temperatures for the stability of the ingredients or resins, the dispersion speed can be reduced appropriately. If necessary, the dispersion process can be halted momentarily to allow proper cooling.

As will be understood by those of skill in the art with reference to this disclosure, other steps, such as using cooling systems to minimize higher dispersion temperatures can additionally or alternatively be used. Also, as will be understood by those of skill in the art with reference to this disclosure, the solvent employed in the preparation of the coating system is chosen in such a manner as to facilitate the preparation of the coating mixture, to provide suitable application properties, and provide and environmentally acceptable paint.

Next, once the desired pigment particle size for the base grind is obtained, the dispersion process can be halted, and the base filtered, if desired, to remove any undesired material from the base, such as grinding media that can optionally have been used. Next, the balance of formula ingredients are then added in a "letdown phase", as it is known in the art, while the pigment base or mill base is mixed. An optional step is to allow the base or finished paint to set for at least twenty-four hours prior to use, which allows the resin to wet all of the pigments.

The shelf life of the polyamide/epoxy-based water reducible primer formulation or the self-priming topcoat composition, or the enhanced self-priming topcoat composition prior to use is generally dictated by the time specifications provided by the supplier of the resin system.

Next, the polyamide/epoxy-based water reducible primer formulation, self-priming topcoat composition, or the enhanced self-priming topcoat composition is prepared by stirring appropriate amounts of a catalyst or activator, such as an isocyanate catalyst, into the finished base described above. Examples of isocyanate catalysts for self-priming topcoat or enhanced self-priming topcoat formulations include an isocyanate solution known as Deft 97GY088CAT available from Deft Inc., having offices in Irvine, California. To ensure proper curing and cross-linking of the resulting paint film, the amount of isocyanate catalyst added to the finished paint base can vary depending on the particular components of the coating system, as will be understood by those of skill in the art with reference to this disclosure.

Next, for the self-priming topcoat composition, or the enhanced self-priming topcoat composition, once the finished base and catalyst have been mixed together, the coating is ready for application to a substrate. The substrate to be coated can be that of a fabricated article, such as aircraft, automobiles, trucks, and farm equipment, for example, further including the components and parts for these articles.

Next, for the polyamide/epoxy-based water reducible primer formulation, once the appropriate amounts of epoxy catalyst and mill base are well mixed together, the appropriate amount of water is then slowly mixed into the primer mill base/epoxy catalyst blend and testing can be performed. The purity and amount of water added depends on what is recommended by the supplier of the coating system based on the spray viscosity and final use of the coating. Since the paint formulation is a water reducible system, care needs to be taken when adding the aqueous component to the epoxy catalyst/mill base blend.

The medium employed in the preparation of the coating system of the present invention is typically chosen in such a manner as to facilitate the preparation of the coating mixture, and to provide suitable adhesion to the substrate. The preferred medium is water, which includes the preparation of water borne coatings. Other systems include solvent-based and powder coatings.

As noted above, once the mill base/epoxy blend and appropriate amount of water are mixed together, the primer is now ready for application to the substrate. Suitable substrates include metal substrates such as aluminum, aluminum alloys, cast aluminum, magnesium, magnesium alloys, titanium, zinc, galvanized zinc, zinc-coated steel, zinc alloys, zinc-iron alloys, zinc-aluminum alloys, steel, stainless steel, pickled steel, iron compounds, magnesium alloys, and the like. Preferred substrates for the practice of the present invention are aluminum and aluminum alloys. The substrate to be coated can be that of a fabricated article, as described above, further including the components and parts for these articles.

The coating mixtures of the invention can be applied to the surfaces of a metal substrate using any conventional technique, such as spraying, painting with a brush, painting with rollers, dipping, and the like, but they are most often applied by spraying. The usual spray techniques and equipment for air spraying and electrostatic spraying and either manual or automatic methods can be used. Preferred for the practice of the present invention is spray coating.

It is preferred that the surface, such as a metal surface, be prepared to receive the coating. This preparation includes the conventional method of first cleaning the surface to remove grease and other contaminants. Once the surface is free of surface contaminants, it can be treated to remove any oxide coating, and in certain instances to provide a conversion coating to which the corrosion-inhibiting mixture can more readily bond. In the event that the surface has a thick oxide coating, then this coating can be removed by conventional means, such as immersion in a series of sequential chemical baths containing concentrated acids and alkalis that remove such a surface coating.

In most embodiments, the substrate or coated substrate is prepared prior to receiving the coating, i.e., is pretreated. This preparation includes the conventional method of first cleaning the surface to remove grease and other contaminants. Once the surface is free of surface contaminants, it can be treated to remove any oxide coating by conventional means, such as by immersing the substrate in a series of sequential chemical baths containing concentrated acids and alkalis known to remove such a surface coating. As noted above, in some embodiments, the substrate is treated to provide a conversion coating to which the coating can more readily bond. Such a conversion coating can be prepared by any means known in the art, such as by immersion in concentrated chromic acid. When an aluminum substrate is used, for example, this process produces a controlled mixture of aluminum oxides on the surface of an aluminum or aluminum alloy substrate. Alternatively, the surface can be treated with a boric acid/sulfuric acid or any other anodizing process. This process produces a controlled mixture of aluminum oxides in the surface of an aluminum or aluminum alloy substrate. Optionally, after the surface has been treated to provide a conversion coating, the surface can be sealed by dipping the substrate into a dilute solution of chromic acid. The surface, whether sealed or unsealed, can then be coated with the coatings described herein.

In one embodiment, the coating is applied to an aluminum anodized substrate to create an aluminum anodized system with and without sealing in a chrome containing solution. In one embodiment, the coating is applied to an aluminum anodized substrate to create an aluminum anodized system with and without sealing in a rare earth solution. In one embodiment, the coating is applied to a steel substrate with and without sealing in the appropriate solution.

The coatings described herein can be applied to a substrate using any conventional technique, such as spraying, "painting" (e.g., with a brush, roller, and the like), dipping, and so forth. With regard to application via spraying, conventional (automatic or manual) spray techniques and equipment used for air spraying and electrostatic spraying can be used. In other embodiments, the coating is an electrolytic coating (e-coating) system, electrostatic (powder) coating, and the like. Various types of curing methods are described below.

The coatings described herein can be any suitable thickness, depending on the application requirements. In one embodiment, the coating is between 25-75 µm (3 mils) thick. In another embodiment, the coating is between 20-30 µm (0.8 to 1.2 mils) thick.

Typically, after application of the coating, the coating is cured using any suitable method. Typical curing methods include air drying, and/or heating and/or UV-curing methods. Other methods include, but are not limited to, microwave cured systems, ultrasonic cured systems, and the like. The method of curing will depend on the type of coating mixture employed, the surface to which it is applied, and so forth.

Once the coating is applied and cured, it can either receive subsequent topcoats, or be cured as a stand-alone coating. If the coating is to receive a subsequent topcoat, or several subsequent coatings, then the subsequent coating should be applied so as to be compatible with the coating layer already present, typically in accordance with the resin and/or topcoat manufacturers' specifications. If the coating does not receive any subsequent topcoats, it can then be allowed to cure.

### Additional Embodiments

In one embodiment, the coating composition is a self-priming topcoat composition, or an enhanced self-priming topcoat composition. These coating compositions can be used on metals such as aluminum, aluminum alloys, cast aluminum, magnesium, magnesium alloys, titanium, zinc, zinc-coated steel, zinc alloys, zinc-iron alloys, zinc-aluminum alloys, bare and galvanized steel, stainless steel, pickled steel, iron compounds, magnesium alloys, substrates having metal pretreatments, such as chrome-based conversion coatings, anodized coatings, cobalt-based conversion coatings, phosphate-based conversion coatings, silica-based conversion coatings, rare earth-based conversion coatings, and stainless metal pretreatments for example, and polymers, polymer/metal composites, composites, coated substrates, and the like. In a preferred but not required embodiment, the self-priming topcoat composition, or the enhanced self-priming topcoat composition is applied over a conversion coating that is less than three days old. Applying the self-priming topcoat composition, or the enhanced self-priming topcoat composition over a conversion coating has been found to maintain good adhesion of the coating to the substrate. It has also been found that conversion coatings that are too thick for a given application can result in cohesive failure in the conversion coating layer. As will be understood by those of skill in the art with reference to this disclosure, the proper conversion coating performance and thickness, for a particular coating composition, will be apparent and preferred coatings comply with MIL-C-5541.

In another embodiment, a process for preparing and using the self-priming topcoat composition, or the enhanced self-priming topcoat composition is provided. According to this embodiment, conventional methods for manufacturing a paint can be used. As will be understood by those of skill in the art with reference to this disclosure, examples of such methods include, but are not limited to, the use of drill presses powered by compressed air or electricity, sand mills that use appropriate grinding media, and the like.

The invention will be further described by reference to the following nonlimiting examples, which are offered to further illustrate various embodiments of the present invention. It should be understood, however, that many variations and modifications can be made while remaining within the scope of the present invention.

Examples 1-10 are reference examples

### EXAMPLE 1

### Exemplary Mill Base Formulations

Group IIA pigments have been tested for corrosion resistance, including sulfates (e.g., anhydrous calcium sulfate, hydrated calcium sulfate, strontium sulfate, barium sulfate), metal phosphates (e.g., hydrous calcium phosphate, anhydrous calcium phosphate and mono- and di-hydrogen calcium phosphate, etc.), alone and in combination with other components. Two examples of the composition, concentrations, material ratios, vendor materials or vendor supplier, of a polyamide/epoxy water reducible primer mill base formulation containing these types of compounds is shown below. Other formulations were also tested:

### Component:

| | |
|---|---|
| Polyamide Resin Blend | 417 g |
| Dispersing Agent | 6 g |
| 2-Butanol Solvent | 87 g |
| Extender/Filler Pigment | 490 g |
| Mill Base Total: | 1000 g |

### Component:

| | |
|---|---|
| Polyamide Resin Blend | 320 g |
| Additive | 5 g |
| 2-Butanol Solvent | 67 g |
| TiO₂(R-960) | 134 g |
| Co-Inhibitor(s) | 100 g |
| Extender/Filler Pigment | 374 g |
| Mill Base Total: | 1000 g |

The concentration of the corrosion inhibitors used as individuals range from 0.1 wt% to 90 wt% .

### Additional Information and Procedures Used

The wt% of inhibitor is based on a fully catalyzed and water reduced primer and the spray viscosity is equal to about 22 seconds on a standard EZ Zhan 2 Cup.

The polyamide/epoxy water reducible primer mill base was then well mixed with appropriate amounts of the epoxy catalyst blend as described above and recommended by the supplier of the resin. One example of an epoxy catalyst/activator would consist of a solvent, an additive, and a resin blend, such as Deft's epoxy/nitroethane solution, manufacturer's code number 44WO16CAT.

Once the appropriate amounts of epoxy catalyst and mill base were well mixed together, the appropriate amount of water was then slowly mixed into the primer mill base/epoxy catalyst blend. The purity and amount of the water added depends on what is recommended by the supplier of the coating system based as described above. Procedures for mixing of the primer, shelf life of primer mill base, spray life of catalyzed and water reduced primer, and the like, are in accordance with the specifications of the supplier of the resin material.

Examples of such primer formulations that have been prepared and evaluated are provided in Table 3 below.

### EXAMPLE 2

### Primer Mill Base Formulation

Oxides, either anhydrous or hydrated, and hydroxides of rare earth elements have been evaluated as being non-toxic alternatives to chromates. Rare earth oxides, either anhydrous or hydrated, and hydroxides, such as Cerium (IV) Oxide, Cerium (IV) Oxide dihydrate, Praseodymium (III) Oxide, and the like, have been incorporated into polyamide/epoxy water reducible primer formulations. One example of a polyamide/epoxy water reducible primer mill base formulation containing rare earth salts is as follows:

| | |
|---|---|
| Polyamide Resin Blend | 341 g |
| Additive | 5 g |
| 2-Butanol Solvent | 71 g |
| TiO₂(R-960) | 143 g |
| Rare Earth Oxide(s) | 40 g |
| Extender/Filler Pigment | 400 g |
| Mill Base Total: | 1000 g |

The concentration of the corrosion inhibitors used as individuals range from about 0.4 wt% (Pr₂O₃ panel Al51) to about 12 wt% (CeO₂·xH₂O). Additional procedures used in this Example were as described in Example 1 under "Additional Information and Procedures Used." See Table 3 in Example 12 for test results.

### EXAMPLE 3

Mixed oxides, either anhydrous or hydrated, and hydroxides of mixed oxides of rare earth elements have been evaluated as being non-toxic alternatives to chromates. Rare earth mixed oxides, either anhydrous or hydrated, and hydroxides, such as Terbium (III/IV) Oxide, Praseodymium (III/IV) Oxide, and the like, have been incorporated, individually and in combination, into polyamide/epoxy water reducible primer formulations. One example of a polyamide/epoxy water reducible primer mill base formulation containing rare earth salts is as follows:

**Primer Mill Base Formulation**

| | |
|---|---|
| Polyamide Resin Blend | 328 g |
| Dispersing Agent | 5 g |
| 2-Butanol Solvent | 68 g |
| TiO₂ | 137 g |

| Rare Earth Mixed Oxide(s) | |
|---|---|
| (Anhy./Hydrous./Hydroxide) | 77 g |
| Extender/Filler Pigment | 385 a |
| Mill Base Total: | 1000 g |

The concentration of the corrosion inhibitors used as individuals range from about 1 wt% (Pr₆O₁₁, panel A22) to about 22.2 wt% (Pr₆O₁₁ panel 227). Additional procedures used in this Example were as described in Example 1 under "Additional Information and Procedures Used." See Table 3 in Example 12 for test results.

### EXAMPLE 4

Amine-based aliphatic, aromatic, cyclic, and or sulfur containing compounds have been evaluated as being non-toxic alternatives to chromates. Amine-based aliphatic, aromatic, cyclic, and or sulfur containing compounds, for example amino acids, such as L-arginine, D,L-arginine, D-methionine, L-methionine, D,L--methionine, glycine, proline, L-cysteine, etc., and other amine-based compounds, such as ethylenediaminetetra-acetic acid (EDTA), di-sodium salts of EDTA, and the like, have been incorporated into polyamide/epoxy water reducible primer formulations. One example of a polyamide/epoxy water reducible primer mill base formulation containing these types of compounds is as follows:

**Primer Mill Base Formulation**

| | |
|---|---|
| Polyamide Resin Blend | 351 g |
| Dispersing Agent | 5 g |
| 2-Butanol Solvent | 73 g |
| TiO₂ | 146 g |
| Amine-based aliphatic, aromatic, cyclic, and/or sulfur containing compound(s) | 14 g |
| Extender/Filler Pigment | 411 g |
| Mill Base Total: | 1000 g |

The concentration of the amino acids used range from about 0.5 wt% (D,L-Methionine panel 0214) to about 1.5 wt% (D,L- Methionine panel 232). Additional procedures used in this Example were as described in Example 1 under "Additional Information and Procedures Used." See Table 3 in Example 12 for test results.

### EXAMPLE 5

Derivatives of amine-based aliphatic, aromatic, cyclic, and or sulfur containing compounds have been evaluated and verified as being non-toxic alternatives to chromates. Derivatives of amine-based aliphatic, aromatic, cyclic, and or sulfur containing compounds, such as D,L-methionine sulfoxide, L-methionine methylsulfonium iodide, and the like, have been incorporated into polyamide/epoxy water reducible primer formulations. One example of this composition, concentrations, material ratios, vendor materials, or vendor supplier, of a polyamide/epoxy water reducible primer mill base formulation containing these types of compounds is as follows:

**Primer Mill Base Formulation**

| | |
|---|---|
| Polyamide Resin Blend | 351 g |
| Dispersing Agent | 5 g |
| 2-Butanol Solvent | 73 g |
| TiO₂ | 146 g |
| Derivative(s) of amine-based aliphatic, aromatic, cyclic, and/or sulfur and/or iodide containing compound(s) | 14 g |
| Extender/Filler Pigment | 411 g |
| Mill Base Total: | 1000 g |

The concentration of the corrosion inhibitors used as individuals range from about 0.5 wt% (D,L-methionine sulfoxide panel 0179) to about 1.1 wt% (D,L-Methionine Sulfoxide panel 234). Additional procedures used in this Example were as described in Example 1 under "Additional Information and Procedures Used." See Table 3 in Example 12 for test results.

### EXAMPLE 6

Gelatin and gelatin derivatives have been evaluated as being non-toxic alternatives to chromates. Gelatin and gelatin derivatives, such as but not limited to animal gelatins and derivatives, fish gelatins and derivatives, and the like, have been incorporated into polyamide/epoxy water reducible primer formulations. One example of a composition, concentrations, material ratios, vender materials, or vender supplier, of a polyamide/epoxy water reducible primer mill base formulation containing these types of compounds is as follows:

**Primer Mill Base Formulation**

| | |
|---|---|
| Polyamide Resin Blend | 351 g |
| Dispersing Agent | 5 g |
| 2-Butanol Solvent | 73 g |
| TiO₂ | 146 g |
| Gelatin(s) and or Gelatin Derivative(s) | 14 g |
| Extender/Filler Pigment | 411 g |
| Mill Base Total: | 1000 g |

The concentration of the corrosion inhibitors used as individuals range from about 0.03 wt% (Animal Gelatin + Pr₆O₁₁+Ce(NO₃)₃ panel A66E) to about 1 wt% (Animal Gelatin + Pr₆O₁₁+Ce(NO₃)₃ panel A28). Additional procedures used in this Example were as described in Example 1 under "Additional Information and Procedures Used." See Table 3 in Example 12 for test results.

### EXAMPLE 7

Chirally Active Dextrins have been evaluated as being non-toxic alternatives to chromates. Chirally Active Dextrins, such as alpha cyclodextrin, beta cyclodextrin, sulfonated cyclodextrins, and the like, have been incorporated into polyamide/epoxy water reducible primer formulations. One example of a polyamide/epoxy water reducible primer mill base formulation containing these types of compounds is as follows:

**Primer Mill Base Formulation**

| | |
|---|---|
| Polyamide Resin Blend | 351 g |
| Dispersing Agent | 5 g |
| 2-Butanol Solvent | 73 g |
| TiO₂ | 146 g |
| Chirally Active Dextrin(s) | 14 g |
| Extender/Filler Pigment | 411 g |
| Mill Base Total: | 1000 g |

The concentration of the corrosion inhibitors used was primarily at about 1.5 wt%(Cyclodextrin + Ce(NO₃)₃ + Pr₆O₁₁ panel C41. Additional procedures used in this Example were as described in Example 1 under "Additional Information and Procedures Used." See Table 3 in Example 12 for test results.

### EXAMPLE 8

Organic-based ionic exchange resins have been evaluated as being non-toxic alternatives to chromates. Organic-based ionic exchange resins; such as organic-based cationic resins, for example Whatman fibrous cellulose phosphate cation exchanger P11, Whatman fibrous carboxymethyl cellulose cation exchanger CM23, and the like, and anionic exchange resins, for example Whatman fibrous diethylaminoethyl cellulose anion exchanger DE23, and Reilex 402 Polymer, and the like, have been incorporated into polyamide/epoxy water reducible primer formulations. One example of a polyamide/epoxy water reducible primer mill base formulation containing rare earth salts is as follows:

**Primer Mill Base Formulation**

| | |
|---|---|
| Polyamide Resin Blend | 351 g |
| Dispersing Agent | 5 g |
| 2-Butanol Solvent | 73 g |
| TiO₂ (R-960) | 146 g |
| Organic-Based Ionic Exchange Resin(s) | 14 g |
| Extender/Filler Pigment | 411 g |
| Mill Base Total: | 1000 g |

The concentration of the corrosion inhibitors used as individuals range from about 0.5 wt% (CM23 + Pr₆O₁₁ panel 1216) to about 1 wt% (DE 23, panel 110). Additional procedures used in this Example were as described in Example 1 under "Additional Information and Procedures Used." See Table 3 in Example 12 for test results.

### EXAMPLE 9

Organic-based, pre-exchanged ionic exchange resins have been evaluated as being non-toxic alternatives to chromates. Organic-based cationic and or anionic ionic exchange resins that have been pre-exchanged with rare earth cations and or amino acids; for example Whatman fibrous cellulose phosphate cation exchanger P11 pre-exchanged with a solution containing salts, oxides and mixed oxides, and or compounds or rare earths, Whatman fibrous cellulose phosphate cation exchanger P11 pre-exchanged with a solution containing amine-based aliphatic, aromatic, cyclic, and or sulfur and or iodide containing compounds and or derivatives of any of the above, etc. have been incorporated into polyamide/epoxy water reducible primer formulations. One example of a polyamide/epoxy water reducible primer mill base formulation containing these types of compounds is as follows:

**Primer Mill Base Formulation**

| | |
|---|---|
| Polyamide Resin Blend | 351 g |
| Dispersing Agent | 5 g |
| 2-Butanol Solvent | 73 g |
| TiO₂ | 146 g |
| Pre-Exchanged Organic-Based Ionic Exchange Resin(s) | 14 g |
| Extender/Filler Pigment | 411 g |
| Mill Base Total: | 1000 g |

The concentration of the corrosion inhibitors used range from about 0.5 wt% (P11 + Pr(NO₃)₃, panel 1162) to about 2.5 wt% (P11 + D,L-Methionine panel 15). Additional procedures used in this Example were as described in Example 1 under "Additional Information and Procedures Used." See Table 3 in Example 12 for test results.

### EXAMPLE 10

Metal sulfates have been evaluated as being nontoxic alternatives to chromates. Metal sulfates, such as praseodymium sulfate or other rare earth sulfates, magnesium sulfate, calcium sulfate, strontium sulfate, and the like, have been incorporated into polyamide/epoxy water reducible primer formulations. One example of the composition, concentrations, material ratios, vendor materials, or vendor supplier, of a polyamide/epoxy water reducible primer mill base formulation containing these types of compounds is as follows:

**Primer Mill Base Formulation**

| | |
|---|---|
| Polyamide Resin Blend | 351 g |
| Dispersing Agent | 5 g |
| 2-Butanol Solvent | 73 g |
| TiO₂ | 146 g |
| Metal Sulfate(s) | 14 g |
| Extender/Filler Pigment | 411 g |
| Mill Base Total: | 1000 g |

The concentration of the corrosion inhibitors used as individuals range from about 1.4 wt% (Pr₂(SO₄)₃ panel A220) to about 18.5 wt% (SrSO₄, panel 267). Additional procedures used in this Example were as described in Example 1 under "Additional Information and Procedures Used." See Table 3 in Example 12 for test results.

### EXAMPLE 11

Combinations of all of the above have been evaluated as being non-toxic alternatives to chromates. Combinations of all of the above, such as L-arginine + praseodymium(III/IV)oxide + calcium sulfate dihydrate, praseodymium sulfate + calcium sulfate + arginine, praseodymium(III/IV) oxide + calcium sulfate + methionine, praseodymium(III)oxide + praseodymium pre-exchanged cationic exchange resin P11 + praseodymium(III/IV)oxide, etc., have been incorporated into polyamide/epoxy water reducible primer formulations. One example of a polyamide/epoxy water reducible primer mill base formulation containing rare earth salts is as follows:

**Primer Mill Base Formulation**

| | |
|---|---|
| Polyamide Resin Blend | 336 g |
| Dispersing Agent | 5 g |
| 2-Butanol Solvent | 71 g |
| TiO₂ | 140 g |
| Pre-Exchanged Organic-Base Ionic Exchange Resin | 14 g |
| Pr₆O₁₁ | 40 g |
| Extender/Filler Pigment | 394 g |
| Mill Base Total: | 1000 g |

The concentration of the corrosion inhibitors used as combinations range from about 0.1 wt% (Ce(NO₃)₃+ Free EDTA, panel D36) to about 30.6 wt% (Ce(NO₃)₃+ Na₂EDTA + Pr₆O₁₁ + CaSO₄·2H₂O panel A38). Additional procedures used in this Example were as described in Example 1 under "Additional Information and Procedures Used." See Table 3 in Example 12 for test results.

### EXAMPLE 12

### Test Results on Exemplary Coatings

Many of the formulations noted in the previous examples were tested on various substrates for corrosion resistance. The Corrosion Rating Scale used is shown in Table 2. Examples of primer formulations that were prepared and evaluated are provided in Table 3.

### Starting Materials

The Deft SrCr Primer (44GN072) was obtained from Deft Inc. having offices in Irvine, California. As noted above, the Raven materials, as well as the Ultra II materials, were obtained from Columbian Chemicals Company having offices in Marietta, Georgia. The LHD, U47 and PLD materials were obtained from Sun Chemical having offices in Cincinnati, Ohio. Pr₆O₁₁ was obtained from Alfa Aesar Co. having offices in Ward Hill, Massachusetts. Conductive carbon, non-conductive carbon, and activated carbon were obtained from Alpha Aesar having offices in Ward Hill, Massachusetts. CaSO₄ 2H₂O was obtained from US Gypsum from Chicago, IL. SrSO₄ was obtained from Excalibar of Huston, TX.

### Test Procedure

The coating was sprayed onto different metal substrates and allowed to dry (cure) naturally over time. Typically this took about one week. Edges and backs of samples were taped and front surfaces were scribed with an "X" pattern according to ASTM B117 procedure. Tests were run according to ASTM B117 procedure for either 500 or 3000 hours and the results evaluated according to the Keller Corrosion Rating Scale shown in Table 2.

### Primer Panel Summary

**Table 2. Corrosion Codes/Rankings Employed in Table 3**

| Code | Scribe line ratings description |
|---|---|
| 1. | Scribe line beginning to darken or shiny scribe |
| 2. | Scribe lines > 50% darkened |
| 3. | Scribe line dark |
| 4. | Several localized sites of white salt in scribe lines |
| 5. | Many localized sites of white salt in scribe lines |
| 6. | White salt filling scribe lines |
| 7. | Dark corrosion sites in scribe lines |
| 8. | Few blisters under primer along scribe line (<12) |
| 9. | Many blisters under primer along scribe line |
| 10. | Slight lift along scribe lines. |
| 11. | Coating curling up along scribe. |
| 12. | Pin point sites/pits of corrosion on organic coating surface (1/16 to 1/8 in diameter-about 0.16 cm (0.06 in) to about 0.32 cm (0.13 in) |
| 13. | One or more blisters on surface away from scribe |
| 14. | Many blisters under primer away from scribe |
| 15. | Starting to blister over surface |
| | |

| Scribe Line Activity (corrosion creepage beyond scribe) | |
|---|---|
| A. | No creepage |
| B. | 0 to 1/64 in -about 0 cm (in) to about 0.04 cm (0.02 in) |
| C. | 1/64 to 1/32 in --about 0.04 cm (0.02 in) to about 0.08 cm (0.03 in) |
| D. | 1/32 to 1/16 in-- about 0.08 cm (0.03 in) to about 0.16 cm (0.06 in) |
| E. | 1/16 to 1/8 in - about 0.16 cm (0.06 in) to about 0.32 cm (0.13 in) |
| F. | 3/16 to 1/4 in -- about 0.2 cm (0.48 in) to about 0.5 cm (0.25 in) |
| G. | 1/4 to 3/8 in -- about 0.6 cm (0.25 in) to about 0.95 cm (0.38 in) |

**Table 3: Panels Prepared and Evaluated**

| Panel Number | Corrosion Inhibitor | Weight Percent* Inhibitor Conc. | Extender/ Transport Enhancer | 2000 HRS Salt Fog Rating | |
|---|---|---|---|---|---|
| 10 | SrCrO₄ | - | - | 1 | A |
| D1 | Ce(NO₃)₃ | 0.15 | Kaolin | 3,6 | A |
| D12 | Ce(NO₃)₃ | 5 | Kaolin | 3,6 | A |
| D3 | Ce(NO₃)₃ | 3 | CaSO₄ (anhy.) | 3,6 | A |
| D40 | Ce(NO₃)₃ | 0.4 | CaSO₄(anhy.) | 3,6 | A |
| D13 | Ce(NO₃)₃ | 5 | CaSO₄ (anhy.) | 3,6 | A |
| D42 | Ce(NO₃)₃ | 0.4 | CaSO₄•2H₂O | 3,5 | A |
| D140 | Ce(NO₃)₃ | .05 | CaSO₄•2H₂O | 3,5 | A |
| D49 | Ce(NO₃)₃ | 5 | CaSO₄•2H₂O | 3,6 | A |
| D73 | Ce(NO₃)₃ H₃(CF₃SO₃)₃ | .75/0.5 | CaSO₄•2H₂0 | 3,6 | A |
| D44 | Ce(NO₃)₃ | 0.5 | Deft (Mistron 600) | 3,6 | A |
| D14 | Ce(NO₃)₃/BaB₂O₄ | 8/8 | Kaolin | 3,6 | A |
| Gen I | CeO₂•2H₂O | 32 | Mistron 600 | 3,6 | A |
| D11 | Ce(NO₃)₃/CeP O₄ | 0.3 / 0.3 | Kaolin | 3,6 | A |
| D15 | Ce(NO₃)₃/Pr( NO₃)₃ / BaB₂O₄ | 1/1/1 | Kaolin | 3,5 | A |
| D16 | Ce(NO₃)₃/Pr( NO₃)₃/ BaB₂O₄ | 0.4 | CaSO₄•2H₂O | 3,5 | A |
| D17 | Ce(NO₃)₃/Pr( NO₃)₃ / BaB₂O₄ | 0.4 / 0.4 / 0.4 | Nicron 604 | 3,6 | A |
| D18 | - | 0.0 | CaSO₄•2H₂O | 3,5 | A |
| D19 | - | 0.0 | Nicron 604 | 3,6 | A |
| C1 | Na₂EDTA | 0.9 | CaSO₄•2H₂O | 3,5 | A |
| D50 | Ce(NO₃)₃+Acid | 1.5 | CaSO₄•2H₂O | 3,4 | A |
| D51 | Ce(NO₃)₃+Base | 1.5 | CaSO₄•2H₂O | 3,4 | A |
| D53 | Ce(NO₃)₃+Base | 1.5 | CaSO₄•2H₂O | 3,4 | A |
| D54 | Ce(NO₃)₃+Acid +H₂O₂ | 1.5 | CaSO₄•2H₂O | 3,4 | A |
| D55 | Ce(NO₃)₃+Base +H₂O₂ | 1.5 | CaSO₄•2H₂O | 3,4 | A |
| D56 | Ce(NO₃)₃+Base +H₂O₂ | 1.5 | CaSO₄•2H₂O | 3,4 | A |
| A1 | PrCl₃ | 3 | Kaolin | 3,6 | A |
| A2 | Pr(NO₃)₃ | 3 | Kaolin | 3,6 | A |
| A5 | Pr(NO₃)₃ | 1 | Kaolin | 3,6 | A |
| A4 | Pr(NO₃)₃ | 8 | Kaolin | 3,6 | A |
| A11 | Pr(NO₃)₃/BaB₂ | 3/3 | Kaolin | 3,6 | A |
| A3 | Pr(NO₃)₃ | 3 | CaSO₄ (anhy.) | 3,5 | A |
| A8 | Pr(NO₃)₃ | 1 | CaSO₄ (anhy.) | 3,5 | A |
| A9 | Pr(NO₃)₃ | 5 | CaSO₄ (anhy.) | 3,5 | A |
| A12 | Pr(NO₃)₃ | 0.5 | CaSO₄•2H₂O | 3,5 | A |
| A26 | Pr(NO₃)₃/Pr₆O₁₁ | 1.5/1.5 | CaSO₄•2H₂O | 3,4 | A |
| A33 | Pr(NO₃)₃/Pr₆O₁₁ | 2/3.1 | CaSO₄•2H₂O | 3,4 | A |
| A46 | Pr(NO₃)₃/Ce(N O₃)₃ | 0.7/1 | CaSO₄•2H₂O | 3,4 | A |
| A19 | PrCO₃ | 1 | CaSO₄•2H₂O | 3,5 | A |
| A21 | PrCO₃ | 3 | Nicron 604 | 3,6 | A |
| A63 | Pr(NO₃)₃+Acid | 1.5 | CaSO₄•2H₂O | 3,5 | A |
| A64 | Pr(NO₃)₃+Base | 1.5 | CaSO₄•2H₂O | 3,4 | A |
| A65 | Pr(NO₃)₃+Base | 1.5 | CaSO₄•2H₂O | 3,4 | A |
| A28 | Ce(NO₃)₃/Pr₆O₁₁ / Gelatin | 3.1/1 /1 | CaSO₄•2H₂O | 3,4 | A |
| A66E | Ce(NO₃)₃/Pr₆O₁₁ / Gelatin | 1.5/1.5 /0.03 | CaSO₄•2H₂O | 1,4 | A |
| A31 | Ce(NO₃)₃/Pr(NO₃)₃ / Gelatin | 1/0.7 /0.2 | CaSO₄•2H₂O | 2,4 | A |
| D28 | Ce(NO₃)₃/Gelatin | 3/0.2 | CaSO₄•2H₂O | 2,4 | A |
| A38 | Ce(NO₃)₃/Na₂E DTA / Pr₆O₁₁ | 1/16 /3.1 | CaSO₄•2H₂O | 2,4 | A |
| C13 | Ce(NO₃)₃/Na₂E DTA / Pr₆O₁₁ | 0.5/16/1 | CaSO₄•2H₂O | 2,4 | A |
| C14 | Ce(NO₃)₃/Na₂E DTA / Pr₆O₁₁/ AlPO₄ | 0.5/16 /1/3 | CaSO₄•2H₂O | 2,4 | A |
| A37 | Ce(NO₃)₃/Pr₆O₁₁ | 1/3.1 | CaSO₄•2H₂O | 2,4 | A |
| A47 | Ce(NO₃)₃/Pr₆O₁₁ | 1.4/0.7 | CaSO₄•2H₂O | 2,4 | A |
| C18 | Ce(NO₃)₃/Na₂E DTA / Pr₆O₁₁ | 0.5/16 /1 | CaSO₄(anhy.) | 3,4 | A |
| C19 | Ce(NO₃)₃/Na₂E DTA /Pr₆O₁₁/ AlPO₄ | 0.5/16 /1/3 | CaSO₄(anhy.) | 3,4 | A |
| A48 | Ce(NO₃)₃/Pr₆O₁₁ | 1.4/0.7 | CaSO₄(anhy.) | 3,4 | A |
| NH1 | Nd(NO₃)₃ | 3 | Kaolin | 3,6 | A |
| NH2 | Sm(C₂H₃O₂)₃ | 3 | Kaolin | 3,6 | A |
| K1 | K-White (Commercial) | 1 | CaSO₄•2H₂O | 3,6 | A |
| K2 | K-White (Commercial) | 3 | CaSO₄•2H₂O | 2,4 | A |
| C1 | Na₂EDTA | 0.9 | CaSO₄•2H₂O | 3,6 | A |
| C2 | Na₂EDTA | 1.8 | CaSO₄•2H₂O | 3,6 | A |
| D26 | Ce(NO₃)₃/Na₂E DTA | 0.25/0.25 | CaSO₄•2H₂O | 3,6 | A |
| D1:.5 | Ce(NO₃)₃/Na₂E | 4.7/4.7 | CaSO₄•2H₂O | 3,6 | A |
| C3 | Free EDTA | Saturated | CaSO₄•2H₂O | 3,6 | A |
| D36 | Ce(NO₃)₃/Free EDTA | 0.06/0.06 | CaSO₄•2H₂O | 3,6 | A |
| D32 | Ce(NO₃)₃/Free EDTA | 1.4/0.6 | CaSO₄•2H₂O | 3,6 | A |
| D38 | Ce(NO₃)₃/Na₂E DTA / Gelatin | 0.7/2 /0.2 | CaSO₄•2H₂O | 3,6 | A |
| C5 | Pr₆O₁₁/Na₂EDT | 3.1/16 | CaSO₄•2H₂O | 2,4 | A |
| C5 | Pr₆O₁₁/Na₂EDT | 1.5/16 | CaSO₄•2H₂O | 2,4 | A |
| A51 | Pr(CF₃SO₃)₃ | 1.5 | Deft Primer (Mistron 600) | 2,4 | A |
| A68 | Pr(CF₃SO₃)₃ | 2.2 | Deft Primer (Mistron 600) | 2,5 | A |
| A54 | Pr(CF₃SO₃)₃ | 1.5 | CaSO₄•2H₂O | 2,4 | A |
| A59 | Pr(CF₃SO₃)₃ | 1 | CaSO₄•2H₂O | 2,4 | A |
| A67 | Pr(CF₃SO₃)₃ | 2.2 | CaSO₄•2H₂O | 2,4 | A |
| D71 | Pr(NO₃)₃/ Pr(CF₃SO₃)₃ | 1.5/2.2 | CaSO₄•2H₂O | 3,4 | A |
| NH10 | Li₂SO₄ | 2.5 | CaSO₄•2H₂O | 3,4 | A |
| NH11 | Li₂SO₄ | 2.5 | Deft Primer (Mistron 600) | 3,6 | A |
| A10 | Pr₆O₁₁ | 3 | CaSO₄(anhy.) | 3,5 | A |
| A40 | Pr₆O₁₁ | 5 | CaSO₄ (anhy.) | 3,5 | A |
| A22 | Pr₆O₁₁ | 1 | CaSO₄•2H₂O | 3,4 | A |
| A23 | Pr₆O₁₁ | 5 | CaSO₄•2H₂O | 3,4 | A |
| A41 | Pr₆O₁₁ | 3 | CaSO₄•2H₂O | 2,5 | A |
| A25 | Pr₆O₁₁ | 3 | Nicron 604 | 3,6 | A |
| A50 | Pr₆O₁₁ | 1.5 | Deft Primer (Mistron 600) | 3,6 | A |
| 8-X6 | Pr₆O₁₁ | 1.5 | Deft Primer (Mistron 600) | 3,6 | A |
| A70 | Pr₆O₁₁ | 5 | Deft Primer (Mistron 600) | 2,4 | A |
| 8-X7 | Pr₆O₁₁ | 1.5 | CaSO₄•2H₂O | 3,6 | A |
| A-69 | Pr₆O₁₁ | 5 | CaSO₄•2H₂O | 1,4 | A |
| C4 | D,L- Methionine | 0.5 | CaSO₄•2H₂O | 3,6 | A |
| C31 | D,L- Methionine | 0.5 | CaSO₄•2H₂O | 2,4 | A |
| C9 | D,L- Methionine | 0.5 | CaSO₄(anhy.) | 3,6 | A |
| C11 | D,L-Methionine / Ce(NO₃)₃ | 0.5/2 | CaSO₄•2H₂O | 3,6 | A |
| C16 | D,L- Methionine / Ce(NO₃)₃ | 0.5/ 1.5 | CaSO₄•2H₂O | 3,6 | A |
| C17 | D,L-Methionine / Ce(NO₃)₃ | 0.5/ 3 | CaSO₄•2H₂O | 3,6 | A |
| D60 | D,L- Methionine / Ce(NO₃)₃ | 0.5/ 3 | Deft Primer (Mistron 600) | 3,6 | A |
| C10 | D,L- Methionine / Ce(NO₃)₃ | 0.5/2 | CaSO₄(anhy.) | 3,6 | A |
| C21 | D,L-Methionine / Ce(NO₃)₃ | 0.5/ 1.5 | CaSO₄(anhy.) | 3,6 | A |
| C22 | D,L-Methionine / Ce(NO₃)₃ | 0.5/ 3 | CaSO₄(anhy.) | 3,6 | A |
| C6 | D,L-Methionine / Pr₆O₁₁ | 3.1/3.1 | CaSO₄•2H₂O | 2,4 | A |
| C15 | D,L- Methionine / Pr₆O₁₁ | 0.5 /1 | CaSO₄•2H₂O | 2,5 | A |
| C8 | D,L- Methionine / Pr₆O₁₁ | 0.5 / 3.1 | CaSO₄•2H₂O | 3,4 | A |
| C35 | D,L-Methionine / / Pr₆O₁₁ / Ce(NO₃)₃ | 0.5/ 1.5/1.5 | CaSO₄•2H₂O | 2,4 | A |
| C37 | L-Arginine/Ce(NO₃)₃ | 1.5/1.5 | CaSO₄•2H₂O | 2,5 | A |
| D57 | L-Arginine/Ce(NO₃)) | 2/1 | CaSO₄•2H₂O | 2,5 | A |
| D58 | L-Arginine/Ce(NO₃)₃ | 2/1 | Deft Primer (Mistron 600) | 3,6 | A |
| C40 | L-Arginine/Ce(NO₃)₃ / Pr₆O₁₁ | 1.5/1.5 /1.5 | CaSO₄•2H₂O | 2,4 | A |
| C38 | Cyclodextrin/Ce(NO₃)₃ | 1.5/1.5 | CaSO₄•2H₂O | 2,5 | A |
| C41 | Cyclodextrin/Ce(NO₃)₃ / Pr₆O₁₁ | 1.5 / 1.5 /1.5. | CaSO₄•2H₂O | 2,5 | A |
| C39 | Cyclodextrin/Ce(NO₃)₃ / EDTA | 1.5/1.5 /1.5 | CaSO₄•2H₂O | 2,5 | A |
| C42 | Cyclodextrin/Ce(NO₃)₃ / Pr₆O₁₁ / EDTA | 1.5/1.5 1.5/1.5 | CaSO₄•2H₂O | 2,5 | A |
| 0179 | D,L-Methionine Sulfoxide | 0.5 | CaSO₄•2H₂O | 1 | A |
| 0160 | L-Methionine Methylsulfonium Iodide | 0.5 | CaSO₄•2H₂O | 1 | A |
| I162 | P11 + Pr(NO₃)₃ | 0.5 | CaSO₄•2H₂O | 2 | A |
| 1163 | CM23 + Pr(NO₃)₃ | 0.5 | CaSO₄•2H₂O | 2 | A |
| C70 | Reilex | 1 | CaSO₄•2H₂O | 3,6 | A |
| C72 | Pr₆O₁₁/ Reilex | 1.5/1 | CaSO₄•2H₂O | 2,5 | A |
| I2 | Methionine / Reilex | 1.5/1 | CaSO₄•2H₂O | 2,5 | A |
| I3 | P11 | 1 | CaSO₄•2H₂O | 2,3 | A |
| I4 | Pr₆O₁₁/P11 | 1.5/1 | CaSO₄•2H₂O | 1,4 | A |
| I5 | Methionine / P11 | 1.5/1 | CaSO₄•2H₂O | 3,6 | A |
| 16 | CM23 | 1 | CaSO₄•2H₂O | 2,4 | A |
| I7 | PrFMS / CM23 | 1.5/1 | CaSO₄•2H₂O | 2,3 | A |
| I8 | Pr₆O₁₁ CM23 | 1.5/1 | CaSO₄•2H₂O | 1 | A |
| I9 | Methionine / CM23 | 1.5/1 | CaSO₄•2H₂O | 2,3 | A |
| I10 | DE23 | 1 | CaSO₄•2H₂O | 2 | A |
| A136 | Pr₂O₃ | 1.5 | 10.5% CaSO₄•2H₂O | 1 | A |
| A137 | Pr₆O₁₁-m | 1.5 | 10.5% CaSO₄•2H₂O | 1 | A |
| A138 | PrO₂ | 1.5 | 10.5% CaSO₄•2H₂O | 1 | A |
| A139 | Pr₆O₁₁ | 1.5 | 10.5% CaSO₄•2H₂O | 1 | A |
| D140 | Ce(NO₃)₃ | .05 | 10.5% CaSO₄•H₂O | 3,5 | A |
| A141 | Pr₂O₃ | 1.5 | 12.4% CaSO₄•2H₂O | 1 | A |
| A142 | Pr₆O₁₁-m | 1.5 | 12.4% CaSO₄•2H₂O | 1 | A |
| A143 | PrO₂ | 1.5 | 12.4% CaSO₄•2H₂O | 1 | A |
| A144 | Pr₆O₁₁ | 1.5 | 12.4% CaSO₄•2H₂O | 1 | A |
| D145 | Ce(NO₃)₃ | .05 | 12.4% CaSO₄•2H₂O | 3,5 | A |
| A146 | Pr₂O₃ | 1.5 | 15.6% CaSO₄•2H₂O | 1 | A |
| A147 | Pr₆O₁₁-m | 1.5 | 15.6% CaSO₄•2H₂O | 1 | A |
| A148 | PrO₂ | 1.5 | 15.6% CaSO₄•2H₂O | 1 | A |
| A149 | Pr₆O₁₁ | 1.5 | 15.6% CaSO₄•2H₂O | 1 | A |
| A150 | Pr₂O₃ | 1.5 | 10.1% CaSO₄•2H₂O | 1 | A |
| A151 | Pr₂O₃ | 0.4 | 10.1% CaSO₄•2H₂O | 1 | A |
| A152 | Pr₂O₃ | 0.4 | 14.6% CaSO₄•2H₂O | 1 | A |
| A153 | Pr₂O₃ | 3.7 | 13.4% CaSO₄•2H₂O | 1 | A |
| A220 | Pr₂(SO₄)₃ | 1.4 | 15% CaSO₄•2H₂O | 1 | A |
| T221 | Tb₃O₇ | 1.4 | 15% CaSO₄•2H₂O | 1 | A |
| 223 | Pr(OH)₃ | 1.4 | 15% CaSO₄•2H₂O | 1,4 | A |
| 224 | Pr₆O₁₁ | 1.95 | 14.8% CaSO₄•2H₂O | 1 | A |
| 225 | Pr₆O₁₁ | 5.6 | 14.2% CaSO₄•2H₂O | 1 | A |
| 226 | Pr₂O₃ | 1.5 | 15% CaSO₄•2H₂O | 1 | A |
| 227 | Pr₆O₁₁ | 22.4 | 0% CaSO₄•2H₂O | 2,5 | A |
| 228 | Pr₂O₃/Pr₆O₁₁/ PrSO₄/D,L Methionine | 1.4/1.4 0.8 / .25 | 14% CaSO₄•2H₂O | 1 | A |
| 229 | PrO₂/ Glycine | 0.4/1.1 | 15% CaSO₄•2H₂O | 1 | A |
| 230 | D-Methionine | 1.1 | 15.2% CaSO₄•2H₂O | 1 | A |
| 231 | D,L-Methionine | 0.5 | 15.4% CaSO₄•2H₂O | 1 | A |
| 232 | D, L-Methionine | 1.5 | 15% CaSO₄•2H₂O | 1 | A |
| 233 | L-Cystiene | 1.1 | 15.2% CaSO₄•2H₂O | 1 | A |
| 234 | D, L-Methionine Sulfoxide | 1.1 | 15.2% CaSOₐ•2H₂O | 1 | A |
| 235 | L-Arginine | 1.1 | 15.2% CaSO₄•2H₂O | 1 | A |
| 237 | Pr₆O₁₁ | 1.5 | 15% CaSO₄•2H₂O | 1 | A |
| 238 | Pr₂O₃ | 1.5 | 15% CaSO₄•2H₂O | 1 | A |
| 239 | Pr₆O₁₁ | 1.5 | 19.5% BaSO₄ | 3,5 | A |
| 240 | Pr₂O₃ | 1.5 | 19.5% BaSO₄ | 3,5 | A |
| 241 | Pr₆O₁₁ | 1.5 | 17.3% SrSO₄ | 1 | A |
| 242 | Pr₂O₃ | 1.5 | 17.3% SrSO₄ | 1 | A |
| 243 | Pr₆O₁₁ | 1.5 | 15% MgSO₄ | Not Tested | |
| 244 | Pr₂O₃ | 1.5 | 15% MgSO₄ | Not Tested | |
| D80 | Basic Extender | 45 | Deft (Mistron 600) | 3,5 | A |
| D84 | CaSO₄•2H₂O | 45 | 10.6% CaSO₄•2H₂O | 1,4 | A |
| 1 | CaSO₄•2H₂O | 100 | 10.6% CaSO₄•2H₂O | 1,4 | A |
| 54 | SrSO₄ | 100 | SrSO₄ | 1 | A |
| RA 420A | CaSO₄•2H₂O | 77 | 10.6% CaSO₄•2H₂O | 1,5 | A |
| RA 420E | SrSO₄•2H₂O | 85 | SrSO₄•2H₂O | 1,5 | A |
| A81 | Pr(CF₃SO₃)₃ | 1.5 | Deft (Mistron 600) | 3,4 | A |
| A82 | Pr₆O₁₁ | 1.5 | Deft (Mistron 600) | 3,4 | A |
| A83 | Pr(CF₃SO₃)₃ | 0.7 | Deft (Mistron 600) | 3,4 | A |
| A85 | Pr(CF₃SO₃)₃ | 1.5 | 10.6% CaSO₄•2H₂O | 2 | A |
| A86 | Pr₆O₁₁ | 1.5 | 10.6% CaSO₄•2H₂O | 1,4 | A |
| A87 | Pr₆O₁₁ | 3 | 10.6% CaSO₄•2H₂O | 1 | A |
| C88 | Pr₆O₁₁ / D,L- Methionine / L- Arginine | 1.5 / 0.5/ 0.5 | 10.6% CaSO₄•2H₂O | 1 | A |
| C89 | D,L-Methionine/ L-Arginine | 0.5 / 0.5 | 10.6% CaSO₄•2H₂O | 1 | A |
| D90 | Ce(NO₃)₃ | 0.5 | 10.6% CaSO₄•2H₂O | 1 | A |
| C91 | Ce(NO₃)₃/ L-Arginine | 0.5/ 0.5 | 10.6% CaSO₄•2H₂O | 2 | A |
| A92 | Ce(NO₃)₃ / Pr₆O₁₁ | 0.51/1 | 10.6% CaSO₄•2H₂O | 2,4 | A |
| A93 | Pr(CF₃SO₃)₃ | 3 | 12.3% CaSO₄•2H₂O | 2 | A |
| A94 | Pr₆O₁₁ | 1.5 | 12.3% CaSO₄•2H₂O | 1 | A |
| A95 | Pr₆O₁₁ | 3 | 12.3% CaSO₄•2H₂O | 1,4 | A |
| C96 | D,L-Methionine / L-Arginine | 0.5/ 0.5 | 12.3% CaSO₄•2H₂O | 1 | A |
| C97 | Ce(NO₃)₃/ L-Arginine | 05/ 0.5 | 12.3% CaSO₄•2H₂O | 2 | A |
| A98 | Pr₆O₁₁ | 3 | 12.3% CaSO₄•2H₂O | 1 | A |
| 199 | - | 0 | 15.6% CaSO₄•2H₂O | 2 | A |
| A200 | Pr₂O₃ | 1.4 | 15% CaSO₄•2H₂O | 1 | A |
| A201 | Pr₂O₃ | 2.8 | 14.5% CaSO₄•2H₂O | 1 | A |
| A202 | Pr₂O₃ | 3.7 | 14.1% CaSO4•2H2O | 1 | A |
| A201 | Pr₂O₃ hand mixed | 1.5 | 15% CaSO₄•2H₂O | 1 | A |
| A204 | PrO₂ | 1.4 | 15% CaSO₄•2H₂O | 1 | A |
| A205 | PrO₂ | 2.2 | 14.7% CaSO₄•2H₂O | 2 | A |
| A206 | PrO₂ - hand mixed | 1.5 | 15% CaSO₄•2H₂O | 1 | A |
| A207 | PrO₂+Pr₂O₃ | 1.4 | 15% CaSO₄•2H₂O | 1 | A |
| A208 | PrO₂+Pr₂O₃ | 2.2 | 14.7% CaSO₄•2H₂O | 1 | A |
| A209 | PrO₂+Pr₂O₃ hand mixed | 1.5 | 15% CaSO₄•2H₂O | 1 | A |
| A210 | Pr₆O₁₁ | 1.4 | 15% CaSO₄•2H₂O | 1 | A |
| A211 | Pr₆O₁₁ | 2.8 | 14.5% CaSO₄•2H₂O | 1 | A |
| A212 | Pr₆O₁₁ | 3.7 | 14.1% CaSO₄•2H₂O | 1 | A |
| A213 | Pr₆O₁₁-hand mixed | 1.5 | 15% CaSO₄•2H₂O | 1 | A |
| 0214 | D,L-Methionine | 0.5 | 15.4% CaSO₄•2H₂O | 1 | A |
| 0215 | D,L-Methionine / Pr₆O₁₁ | 0.5/ 1.4 | 14.8% CaSO₄•2H₂O | 1 | A |
| 1216 | CM23 / Pr₆O₁₁ | 0.5/2.6 | 14.3% CaSO₄•2H₂O | 2 | A |
| A219 | Pr₆O₁₁ | 1.4 | 15% CaSO₄•2H₂O | 1 | A |

| | | | | | |
|---|---|---|---|---|---|
| *Weight percent based on fully catalyzed and water reduced sprayable paint, such that 1000 g of mill base material is mixed with 400 g of Deft epoxy resin/catalysts/activator and 1273 g of water added in three portions with stirring. | | | | | |

### EXAMPLE 13

### Enhanced Self-priming Topcoat Base Formulation

Enhanced self-priming topcoat base formulations comprising one or more Group I A or Group II A, and/or yttrium, and/or lanthanide compounds, such as metal sulfates, metal phosphates, metal nitrates, and/or metal silicates and the like; and optionally one or more co-inhibitors such as, rare earth compounds, metal oxides, borates, metaborates, silicates, phosphates, phosphonates, aniline, polyaniline, and the like, were prepared. An exemplary formulation is shown below in Table 4.

**Table 4. Enhanced Self-Priming Topcoat Base Formulation**

| | |
|---|---|
| Component | Mass (g) |
| Polyester Resin Blend (binder) | 130 |
| Fluorinated Resin Blend (binder) | 240 |
| Dispersing Agent | 6 |
| Ketone Solvent | 77 |
| VOC Exempt Solvents | 5 |
| Color Pigments | 45 |
| Corrosion Inhibitive Pigments | 310 |
| Extender Pigments | 74 |
| Base Total: | 1000 |

According to the present invention, direct to metal coatings and enhanced direct to metal coatings were prepared with the base formulations described herein. The coating compositions also included an isocyanate catalyst, that is, a two-part formulation, such as isocyanate solution 97GY088CAT, available from Deft Inc., having offices in Irvine, CA. The direct to metal coatings and enhanced direct to metal coatings, shown herein by way of exemple, were prepared by adequately stirring appropriate amounts of isocyanate catalyst into the base formulations described above. The amount of isocyanate catalyst included in the coating compositions was added according to the amount recommended by the supplier to ensure proper curing and cross-linking of the resulting coating. The solvent employed in the preparation of the coating system of the present invention was chosen in such a manner as to facilitate the preparation of the coating mixture, to provide suitable application properties, and to provide an environmentally acceptable paint.

Once the base and isocyanate catalyst were mixed together, the direct to metal coatings and enhanced direct to metal coatings were substrates. Tests were run on various sample formulations, according to ASTM B117 procedure, for either 1000, 2000, or 3000 hours. The results were evaluated according to the Keller Corrosion Rating Scale. Examples of coating formulations that were prepared and evaluated are provided below.

### Test Procedure

The coating compositions tested were sprayed onto different metal substrates and allowed to dry (cure) naturally over time, typically about one week. Edges and backs of samples were taped and front surfaces were scribed with an "X" pattern according to ASTM B117 procedure. Results are shown in Tables 5-7.

**Table 5. Non-chromium Inhibitor Containing Primer Plus Topcoat,**

| Sample Number | *Deft Primer | *Deft Topcoat | **Weight Percent Corrosion Inhibitor in Topcoat | 2000 Hour Salt Fog Rating |
|---|---|---|---|---|
| 396 | 44GY030 | 99GY001 | None | 3,6 |
| 397 | 44GY030 | 99GY001 | 9% Pr₆O₁₁ | 3,6 |
| 421 | 44GY030 | 99W009 | None | 3,5 |
| 386 | 44GY030 | 99W009 | 9% Pr₂O₃ | 3,6 |
| 401 | 44GY030 | 99W009 | 9% CeO₂ | 3,6 |
| 399 | 44BK016 | 99GY001 | 9% Pr₆O₁₁ | 3,4 |

| | | | | |
|---|---|---|---|---|
| *Deft Primer and Deft Topcoat numbers refer to product identification numbers of primer and topcoat formulations, available from Deft Inc., having offices in Irvine, California. ** Weight percent inhibitor pigment based on total weight percent of fully catalyzed and sprayable topcoat. | | | | |

**Table 6. Self-priming Topcoat Formulations.**

| Sample Number | *Deft Primer | Weight Percent Extender | **Weight Percent Inhibitor in Topcoat | 2000 Hours Salt Fog Rating |
|---|---|---|---|---|
| A-5-A | 03W211 | 44 CaSO₄·2H₂O | 8% Pr₂O₃ | 3,5 |

| | | | | |
|---|---|---|---|---|
| * Deft Primer number refers to product identification number of primer formulation, available from Deft Inc., having offices in Irvine, California, ** Weight percent inhibitor pigment based on total weight percent of fully catalyzed and sprayable topcoat. | | | | |

**Table 7. Enhanced Self-priming Topcoat Formulations,**

| Sample Number | *Deft Coating | **Corrosion Inhibitor/Weight Percent | | **Color Pigment/Weight Percent | | ***Extender/ Weight Percent | | 2000 Hr Salt Fog Rating |
|---|---|---|---|---|---|---|---|---|
| 139-057(A) | 97GY088 | Pr₂O₃ | 12.89 | Titanium Dioxide | 13.89 | Lo-Vel® | 25.17 | 1A |
| | | CaSO₄·2H₂O | 47.74 | Iron Yellow Oxide | 0.17 | HSF | | |
| | | | | Carbazole Violet | 0.01 | | | |
| | | | | Phthalo Blue | 0.03 | | | |
| 139-059(A) | 97GY089 | Pr₂O₃ | 2.14 | Titanium Dioxide | 13.26 | Lo-Vel® | 24.01 | 1A |
| | | CaSO₄·2H₂O | 42.45 | Iron Yellow Oxide | 0.18 | HSF | | |
| | | Pr₂(SO₄)₃ | 0.85 | Carbon Black | 0.10 | | | |
| | | Pr₆O₁₃ | 16.98 | Phthalo Blue | 0.03 | | | |
| 139-058(A) | 97GY089 | Pr₆O₁₁ | 23.62 | Titanium Dioxide | 12.83 | Lo-Vel® | 23.23 | 2A |
| | | CaSO₄·2H₂O | 40.03 | Iron Yellow Oxide | 0.16 | HSF | | |
| | | | | Carbazole Violet | 0.09 | | | |
| | | | | Phthalo Blue | 0.03 | | | |
| 148-079(A) | 97GY089 | Pr₂O₃ | 2.49 | Titanium Dioxide | 10.25 | Lo-Vel® | 17.48 | 1A |
| | | CaSO₄·2H₂O | 48.97 | Iron Yellow Oxide | 0.13 | HSF | | |
| | | Pr₂(SO₄)₃ | 0.99 | Carbazole Violet | 0.01 | | | |
| | | Pr₆O₁₁ | 19.58 | Carbon Black | 0.07 | | | |
| | | | | Phthalo Blue | 0.03 | | | |
| 148-097(A) | 97GY128 | Pr₂O₃ | 1.54 | Titanium Dioxide | 18.85 | Lo-Vel® | 35.69 | 3A |
| | | CaSO₄·2H₂O | 30.63 | Iron Yellow Oxide | 0.24 | HSF | | |
| | | Pr₂(SO₄)₃ | 0.6 1 | Carbazole Violet | 0.01 | | | |
| | | Pr₆O₁₁ | 12.25 | Carbon Black | 0.13 | | | |
| | | | | Phthalo Blue | 0.05 | | | |
| 148-078(A) | 97GY121 | Pr₂O₃ | 14.98 | Titanium Dioxide | 10.82 | Lo-Vel® | 18.47 | 1A |
| | | CaSO₄.2H₂O | 55.48 | Iron Yellow Oxide | 0.14 | HSF | | |
| | | | | Carbazole Violet | 0.01 | | | |
| | | | | Carbon Black | 0.07 | | | |
| | | | | Phthalo Blue | 0.03 | | | |
| | | | | | | | | |
| 148-084(A) | 97GY124 | Pr₂O₃ | 2.14 | Titanium Dioxide | 19.45 | Lo-Vel® | 36.85 | 3A |
| | | CaSO₄.2H₂O | 42.45 | Iron Yellow Oxide | 0.24 | HSF | | |
| | | Pr₂(SO₄)₃ | 0.85 | Carbazole Violet | 0.01 | | | |
| | | Pr₆O₁₁ | 16.98 | Carbon Black | 0.13 | | | |
| | | | | Phthalo Blue | 0.05 | | | |

| | | | | | | | | |
|---|---|---|---|---|---|---|---|---|
| * Deft Coating number refers to product identification number of coating formulation, available from Deft Inc., having offices in Irvine, California, ** Weight percent of inhibitor and pigment is based on the total weight percent of fully catalyzed and sprayable topcoat. *** Weight percent of extender is based on the total weight percent of fully catalyzed and sprayable topcoat. Lo-Vel® HSF, available from PPG Industries, having offices in Pittsburgh, PA. | | | | | | | | |

As shown in Tables 5-7, incorporating extenders in conjunction rare earth corrosion inhibitors into the enhanced self-priming topcoat results in coating compositions with good or excellent performance. As shown in Table 7, the extenders in conjunction with the rare earth corrosion inhibitors when incorporated into the enhanced self-priming topcoat, provides the best corrosion resistance. As shown in Table 5, incorporating corrosion inhibitors directly into a topcoat and applying over anon-chrome primer, results in coating systems that do not perform as well as the coatings shown in Table 7. As shown in Table 6, the corrosion resistance of the self-priming topcoat with extenders and rare earth compound corrosion inhibitors is comparable to the perfomance of the non-chrome primer and topcoat formulations shown in Table 5. Thus, the self-priming topcoat compositions, according to the present invention, can achieve similar performance to systems that use both a non-chrome primer and a topcoat, without the use of a primer. Further, as shown in Table 7, the enhanced self-priming topcoats perform better than the non-chrome primer plus topcoat systems, thus providing better corrosion protection as a one-coat system without the need for a inter-coat polymeric coating or primer.

Accordingly, the enhanced self-priming topcoats have both excellent weathering resistance and durability, as well as the corrosion resistance necessary to provide protection to underlying substrates.

Further, the coating compositions according to the present invention are non-chromium containing and are environmentally superior to currently known chromium containing coating systems. Finally the self-priming topcoat and enhanced self-priming topcoat compositions provide corrosion protection as a one-coat system without the need for an inter-coat polymeric coating or primer, thus minimizing the production time and costs of producing industrial, consumer, and military parts and goods.

### Conclusion

Controlling the local environment near the primer and substrate interface is known to be important for maximum corrosion protection. Local pH and ionic activity can be modified in a favorable way by incorporating the various components described herein in the coating, including neutral to slightly acidic generating extenders, generating acidic extenders and/or rare earth compounds, alone or in combination with each other and/or with other materials such as polymeric resin binders, ionic exchange resins, and so forth. The coating compositions described herein have good adhesion to substrates such as metals, including aluminum and aluminum alloys. These novel coatings, coating systems and associated processes provide viable alternatives to coatings containing chromates as they are environmentally superior to currently know chromium containing coating systems.

## Claims

1. A non-chromate containing corrosion inhibiting coating composition comprising:
one or more organic binders; and
solid components comprising:
a praseodymium oxide selected from the group consisting of oxides, mixed oxides, solid solution oxides, hydrated oxides, and combinations thereof; and
one or more neutral to slightly acidic generating extenders, wherein the neutral to slightly acidic generating extenders are selected from the group consisting of cerous phosphate, calcium sulfate, strontium sulfate, protonated calcium phosphate, and combinations thereof;
wherein the solid components comprise 0.1 wt% to 90 wt% of the praseodymium oxide;
wherein the non-chromate containing composition is capable of curing naturally and, upon curing, is capable of generating a pH between 4 and 8 at an interface between the composition and a substrate.

2. The composition of claim 1, wherein the praseodymium oxide is a hydrated oxide.

3. The composition of claim 1, wherein the praseodymium oxide is selected from the group consisting of PrO₂, Pr₂O₃, and combinations thereof.

4. The composition of claim 1, wherein the praseodymium oxide comprises a praseodymium (III/IV) mixed oxide.

5. The composition of claim 1, wherein the praseodymium mixed oxide is Pr₆O₁₁.

6. The composition of claim 1, wherein the solid components comprise 0.4 weight % up to 28 wt% of Pr₆O₁₁.

7. The composition of claim 1, further comprising one or more substantially insoluble extenders, wherein at least one of the one or more substantially insoluble extenders is a sulfur, phosphorus or silicon oxyanion-containing salt.

8. The composition of claim 1, wherein the composition is selected from the group consisting of aqueous, solvent-based, and powder coating compositions.

9. The composition of claim 1, wherein at least one of the one or more organic binders is selected from the group consisting of epoxy, urethane, urea, acrylate, alkyd, melamine, polyester, vinyl, vinyl ester, silicone, siloxane, silicate, sulfide, sulfone, polysulfide, epoxy novolac, epoxy phenolic, amides, drying oils, and hydrocarbon polymers.

10. The composition of claim 1, further comprising material selected from the group consisting of gelatin, amino acids, pigments, linear dextrins, cyclic dextrins, organic-based ion exchange resins, and combinations thereof.

11. A method for preparing a non-chromate containing coating composition comprising:
preparing a paint formulation comprised of an organic binder; and
adding an effective corrosion-inhibiting amount of a solid component to the paint formulation to produce a coating composition, the solid component comprising:
a praseodymium oxide selected from the group consisting of oxides, mixed oxides, solid solution oxides, hydrated oxides, and combinations thereof; and
one or more neutral to slightly acidic generating extenders, wherein the neutral to slightly acidic generating extenders are selected from the group consisting of cerous phosphate, calcium sulfate, strontium sulfate, protonated calcium phosphate, and combinations thereof;
wherein the praseodymium oxide comprises 1 wt% to 90 wt% of the solid components;
wherein the non-chromate containing composition is capable of curing naturally and, upon curing, is capable of generating a pH between 4 and 8 at an interface between the composition and a substrate.

12. The method of claim 11, wherein the praseodymium oxide is Pr₆O₁₁.

13. The method of claim 11, further comprising the step of pre-dispersing the praseodymium oxide with a dispersant.

14. The method of claim 11, wherein at least one of the one or more extenders is calcium sulfate.

15. The method of claim 11, further comprising adding material selected from the group consisting of gelatin, amino acids, pigments, linear dextrins, cyclic dextrins, organic-based ion exchange resins, and combinations thereof.

## Patentansprüche

1. Nicht chromathaltige korrosionshemmende Beschichtungszusammensetzung, umfassend:
ein oder mehrere organische Bindemittel; und
feste Komponenten, umfassend:
ein Praseodymoxid, ausgewählt aus der Gruppe, bestehend aus Oxiden, Mischoxiden, Oxiden von festen Lösungen, hydratisierten Oxiden und Kombinationen davon; und
ein oder mehrere neutrale bis leicht säurebildende Streckmittel, wobei die neutralen bis leicht säurebildenden Streckmittel ausgewählt sind aus der Gruppe, bestehend aus Cer(III)-phosphat, Calciumsulfat, Strontiumsulfat, protoniertem Calciumphosphat und Kombinationen davon;
wobei die festen Komponenten 0,1 Gew.-% bis 90 Gew.-% des Praseodymoxids umfassen;
wobei die nicht chromathaltige Zusammensetzung natürlich aushärten kann und beim Aushärten einen pH-Wert zwischen 4 und 8 an einer Schnittstelle zwischen der Zusammensetzung und einem Substrat erzeugen kann.

2. Zusammensetzung nach Anspruch 1, wobei das Praseodymoxid ein hydratisiertes Oxid ist.

3. Zusammensetzung nach Anspruch 1, wobei das Praseodymoxid ausgewählt ist aus der Gruppe, bestehend aus PrO₂, Pr₂O₃ und Kombinationen davon.

4. Zusammensetzung nach Anspruch 1, wobei das Praseodymoxid ein Praseodym(III/IV)-Mischoxid umfasst.

5. Zusammensetzung nach Anspruch 1, wobei das Praseodym-Mischoxid Pr₆O₁₁ ist.

6. Zusammensetzung nach Anspruch 1, wobei die festen Komponenten 0,4 Gewichts-% bis 28 Gew.-% von Pr₆O₁₁ umfassen.

7. Zusammensetzung nach Anspruch 1, weiter umfassend ein oder mehrere im Wesentlichen unlösliche Streckmittel, wobei mindestens eines des einen oder der mehreren im Wesentlichen unlöslichen Streckmittel ein Salz ist, das ein Schwefel-, Phosphor- oder Silicium-Oxyanion enthält.

8. Zusammensetzung nach Anspruch 1, wobei die Zusammensetzung ausgewählt ist aus der Gruppe, bestehend aus wässrigen, lösungsmittelbasierten und Pulver-Beschichtungszusammensetzungen.

9. Zusammensetzung nach Anspruch 1, wobei mindestens eines des einen oder der mehreren organischen Bindemittel ausgewählt ist aus der Gruppe, bestehend aus Epoxid, Urethan, Urea, Acrylat, Alkyd, Melamin, Polyester, Vinyl, Vinylester, Silikon, Siloxan, Silikat, Sulfid, Sulfon, Polysulfid, Epoxid-Novolak, Epoxid-Phenol, Amiden, Trocknungsölen und Kohlenwasserstoff-Polymeren.

10. Zusammensetzung nach Anspruch 1, weiter umfassend Material, das ausgewählt ist aus der Gruppe, bestehend aus Gelatine, Aminosäuren, Pigmenten, linearen Dextrinen, cyclischen Dextrinen, organisch basierten lonenaustauschharzen und Kombinationen davon.

11. Verfahren zum Herstellen einer nicht chromathaltigen Beschichtungszusammensetzung, umfassend:
Herstellen einer Anstrichformulierung, die aus einem organischen Bindemittel gebildet ist; und
Zugeben einer wirksamen korrosionshemmenden Menge einer festen Komponente zur Anstrichformulierung, um eine Beschichtungszusammensetzung zu produzieren, wobei die feste Komponente umfasst:
ein Praseodymoxid, ausgewählt aus der Gruppe, bestehend aus Oxiden, Mischoxiden, Oxiden von festen Lösungen, hydratisierten Oxiden und Kombinationen davon; und
ein oder mehrere neutrale bis leicht säurebildende Streckmittel, wobei die neutralen bis leicht säurebildenden Streckmittel ausgewählt sind aus der Gruppe, bestehend aus Cer(III)-phosphat, Calciumsulfat, Strontiumsulfat, protoniertem Calciumphosphat und Kombinationen davon;
wobei das Praseodymoxid 1 Gew.-% bis 90 Gew.-% der festen Komponenten umfasst;
wobei die nicht chromathaltige Zusammensetzung natürlich aushärten kann und beim Aushärten einen pH-Wert zwischen 4 und 8 an einer Schnittstelle zwischen der Zusammensetzung und einem Substrat erzeugen kann.

12. Verfahren nach Anspruch 11, wobei das Praseodymoxid Pr₆O₁₁ ist.

13. Verfahren nach Anspruch 11, weiter umfassend den Schritt eines Vordispergierens des Praseodymoxids mit einem Dispergiermittel.

14. Verfahren nach Anspruch 11, wobei mindestens eines des einen oder der mehreren Streckmittel Calciumsulfat ist.

15. Verfahren nach Anspruch 11, weiter umfassend Zugeben von Material, das ausgewählt ist aus der Gruppe, bestehend aus Gelatine, Aminosäuren, Pigmenten, linearen Dextrinen, cyclischen Dextrinen, organisch basierten lonenaustauschharzen und Kombinationen davon.

## Revendications

1. Composition de revêtement inhibant la corrosion ne contenant pas de chromate comprenant :
un ou plusieurs liants organiques ; et
des composants solides comprenant :
un oxyde de praséodyme sélectionné dans le groupe constitué des oxydes, des oxydes mixtes, des oxydes en solution solide, des oxydes hydratés, et des combinaisons de ceux-ci ; et
une ou plusieurs matières de charge neutres ou légèrement acidifiantes, dans laquelle les matières de charge neutres ou légèrement acidifiantes sont sélectionnées dans le groupe constitué du phosphate céreux, du sulfate de calcium, du sulfate de strontium, du sulfate de calcium protoné, et des combinaisons de ceux-ci ;
dans laquelle les composants solides comprennent 0,1 % en poids à 90 % en poids de l'oxyde de praséodyme ;
dans laquelle la composition ne contenant pas de chromate est capable de durcir naturellement et, lors du durcissement, est capable de générer un pH entre 4 et 8 au niveau d'une interface entre la composition et un substrat.

2. Composition selon la revendication 1, dans laquelle l'oxyde de praséodyme est un oxyde hydraté.

3. Composition selon la revendication 1, dans laquelle l'oxyde de praséodyme est sélectionné dans le groupe constitué de PrO₂, de Pr₂O₃, et des combinaisons de ceux-ci.

4. Composition selon la revendication 1, dans laquelle l'oxyde de praséodyme comprend un oxyde mixte de praséodyme (III/IV).

5. Composition selon la revendication 1, dans laquelle l'oxyde mixte de praséodyme est Pr₆O₁₁.

6. Composition selon la revendication 1, dans laquelle les composants solides comprennent 0,4 % en poids jusqu'à 28 % en poids de Pr₆O₁₁.

7. Composition selon la revendication 1, comprenant en outre une ou plusieurs matières de charge sensiblement insolubles, dans laquelle au moins l'une des une ou plusieurs matières de charge sensiblement insolubles est un sel contenant un oxyanion de soufre, de phosphore ou de silicium.

8. Composition selon la revendication 1, dans laquelle la composition est sélectionnée dans le groupe constitué des compositions de revêtement aqueuses, à base de solvant, et pulvérulentes.

9. Composition selon la revendication 1, dans laquelle au moins l'un des un ou plusieurs liants organiques est sélectionné dans le groupe constitué d'un époxy, d'un uréthane, d'une urée, d'un acrylate, d'un alkyde, d'une mélamine, d'un polyester, d'un vinyle, d'un ester de vinyle, d'une silicone, d'un siloxane, d'un silicate, d'un sulfure, d'une sulfone, d'un polysulfure, d'un époxy novolaque, d'un époxy phénolique, des amides, des huiles siccatives, et des polymères hydrocarbonés.

10. Composition selon la revendication 1, comprenant en outre un matériau sélectionné dans le groupe constitué d'une gélatine, des acides aminés, des pigments, des dextrines linéaires, des dextrines cycliques, des résines organiques échangeuses d'ions, et des combinaisons de ceux-ci.

11. Procédé pour préparer une composition de revêtement ne contenant pas de chromate comprenant :
la préparation d'une formulation de peinture composée d'un liant organique ; et
l'ajout d'une quantité efficace inhibant la corrosion d'un composant solide à la formulation de peinture pour produire une composition de revêtement, le composant solide comprenant :
un oxyde de praséodyme sélectionné dans le groupe constitué des oxydes, des oxydes mixtes, des oxydes en solution solide, des oxydes hydratés, et des combinaisons de ceux-ci ; et
une ou plusieurs matières de charge neutres ou légèrement acidifiantes, dans lequel les matières de charge neutres ou légèrement acidifiantes sont sélectionnées dans le groupe constitué du phosphate céreux, du sulfate de calcium, du sulfate de strontium, du sulfate de calcium protoné, et des combinaisons de ceux-ci ;
dans lequel l'oxyde de praséodyme comprend 0,1 % en poids à 90 % en poids des composants solides ;
dans lequel la composition ne contenant pas de chromate est capable de durcir naturellement et, lors du durcissement, est capable de générer un pH entre 4 et 8 au niveau d'une interface entre la composition et un substrat.

12. Procédé selon la revendication 11, dans lequel l'oxyde de praséodyme est Pr₆O₁₁.

13. Procédé selon la revendication 11, comprenant en outre l'étape de dispersion préalable de l'oxyde de praséodyme avec un dispersant.

14. Procédé selon la revendication 11, dans lequel au moins l'une des une ou plusieurs matières de charge est le sulfate de calcium.

15. Procédé selon la revendication 11, comprenant en outre l'ajout d'un matériau sélectionné dans le groupe constitué d'une gélatine, des acides aminés, des pigments, des dextrines linéaires, des dextrines cycliques, des résines organiques échangeuses d'ions, et des combinaisons de ceux-ci.
